# EUROPEAN PATENT SPECIFICATION

(11) **EP 3 252 346 B1**
(45) Date of publication and mention of the grant of the patent: **24.04.2019**
(21) Application number: 15880030.0
(22) Date of filing: 30.03.2015
(51) Int. Cl.: F16H 57/04, F16N 31/00

(54) **OIL GUTTER AND TRANSMISSION PROVIDED WITH SAME**
ÖLRINNE UND DAMIT AUSGESTATTETES GETRIEBE
ANNEAU D'HUILE ET TRANSMISSION POURVUE DE CELUI-CI

(30) Priority: 29.01.2015 JP 2015015332
(43) Date of publication of application: 06.12.2017
(73) Proprietor: Aichi Machine Industry Co., Ltd., Nagoya-shi, Aichi 456-8601 (JP)
(72) Inventor: HOSONO Kiyohito, Nagoya-shi Aichi 456-8601 (JP); IBE Seiji, Nagoya-shi Aichi 456-8601 (JP); SATO Kazuhiko, Nagoya-shi Aichi 456-8601 (JP); SAKURAI Hirohito, Nagoya-shi Aichi 456-8601 (JP); AOYAMA Hideki, Nagoya-shi Aichi 456-8601 (JP)
(74) Representative: Global IP Europe Patentanwaltskanzlei
(86) International application number: PCT/JP2015/059918
(87) International publication number: WO 2016/121135

(56) References cited:
- WO-A1-2014/033940
- DE-A1-102009 052 595
- JP-A- H04 285 356
- JP-A- 2007 205 367
- JP-A- 2010 031 882
- JP-A- 2010 048 410
- JP-A- 2011 007 208
- JP-A- 2011 137 493
- JP-A- 2013 015 182
- JP-A- 2013 108 595
- JP-A- 2013 224 720
- JP-A- 2014 194 246
- JP-A- 2014 214 845

## Description

### Technical Field

The present invention relates to an oil gutter and a transmission provided with the same, the oil gutter being configured to introduce lubricating oil which has been scooped up by a rotation member, and supply the introduced lubricating oil to a first lubrication-requiring member and a second lubrication-requiring member which is disposed at a position farther than the first lubrication-requiring member with respect to the rotation member.

### Background Art

In Japanese Unexamined Patent Application Publication No. H4-285356 (Patent document 1), an oil gutter is disclosed that is disposed on an upper side of a secondary shaft of a transmission and extends substantially parallel to the secondary shaft from a front side to a rear side of the transmission. This oil gutter is configured to introduce lubricating oil which has been scooped up by a differential gear, allow the introduced lubricating oil to flow out from a supply port provided at a flow channel, and thereby supply the lubricating oil to a predetermined portion of the transmission.

This oil gutter comprises an introduction section and a partition wall. The introduction section is for introducing lubricating oil, and extends to a position near the differential gear. The partition wall is provided along an extending direction of the oil gutter so as to divide the flow channel into two flow channels. Thus, the oil gutter is configured to increase an amount of lubricating oil to be introduced, and surely supply the introduced lubricating oil to the predetermined portion of the transmission. As a result, the oil gutter reduces the amount of lubricating oil, and thus reduces drive loss due to stirring resistance caused by scooping up the lubricating oil.

DE 10 2009 052595 A1 discloses an oil gutter configured to introduce lubricating oil which has been scooped up by a rotation member, and supply the introduced lubricating oil to a first lubrication-requiring member and a second lubrication-requiring member which is disposed at a position farther than the first lubrication-requiring member with respect to the rotation member, the oil gutter comprising: an introduction section configured to introduce the lubricating oil which has been scooped up by the rotation member; a flow channel-forming section forming a flow channel, and configured to allow the lubricating oil which has been introduced to the introduction section to flow in the flow channel; and first and second supply sections provided in the flow channel-forming section at respective positions corresponding to the first and second lubrication-requiring members, and configured to supply the lubricating oil flowing in the flow channel-forming section to the first and second lubrication-requiring members.

### Citation List

### Patent Literature

Patent document 1: Japanese Unexamined Patent Application Publication No. H4-285356A

### Summary of Invention

### Technical Problem

In general, in a configuration that allows lubricating oil which has been introduced to an oil gutter to flow out from a supply port to lubricate a predetermined portion of a transmission, the lubricating property in the downstream area of the oil gutter becomes a problem. This is because the amount of flowing lubricating oil decreases as the lubricating oil flows toward the downstream direction of the oil gutter. The same problem is present in the above-mentioned oil gutter. A sufficient amount of lubricating oil could be ensured even in the downstream area of the oil gutter if the amount of lubricating oil is increased, the lubricating oil is scooped up by a gear other than the differential gear, and the scooped-up lubricating oil is introduced by the oil gutter. However, this leads to an increase in stirring resistance.

In light of the above, an object of the present invention is to provide a technology capable of improving lubrication performance without increasing drive loss.

### Solution to Problem

The oil gutter and the transmission provided with the oil gutter of the present invention adopt the following means in order to achieve the object described above.

According to a first aspect of an oil gutter according to the present invention, the oil gutter is configured to introduce a lubricant oil which has been scooped up by a rotation member, and supply the introduced lubricating oil to a first lubrication-requiring member and a second lubrication-requiring member. The second lubrication-requiring member is disposed at a position farther than the first lubrication-requiring member with respect to the rotation member. The oil gutter comprises an introduction section, a flow channel-forming section, first and second supply sections, and a re-supply member. The introduction section is configured to introduce the lubricating oil which has been scooped up by the rotation member. The flow channel-forming section forms a flow channel, and configured to allow the lubricating oil which has been introduced to the introduction section to flow in the flow channel. The first and second supply sections are provided in the flow channel-forming section at respective positions corresponding to the first and second lubrication-requiring members, and configured to supply the lubricating oil flowing in the flow channel-forming section to the first and second lubrication-requiring members. The re-supply member is configured to re-introduce at least a portion of the lubricating oil which has been supplied from the first supply section to the first lubrication-requiring member and has been splashed by the first lubrication-requiring member, and re-supply the re-introduced lubricating oil to the second lubrication-requiring member.

The description "splashed by the first lubrication-requiring member" in the present invention may typically correspond to an aspect in which the first lubrication-requiring member is a rotation body, and the lubricating oil is scooped up and then splashed when the first lubrication-requiring member rotates. The above description also may suitably include an aspect in which the first lubrication-requiring member is a non-rotation body, and the lubricating oil impinges and bounces off the first lubrication-requiring member and is thus splashed.

According to the present invention, not only the lubricating oil from the second supply section but also the lubricating oil from the re-supply member are supplied to the second lubrication-requiring member which is disposed at a position farther than the first lubrication-requiring member with respect to the rotation member. Therefore, a sufficient amount of lubricating oil can be supplied even to the lubrication-requiring member which is located on a downstream side of the oil gutter. Furthermore, since the re-supply member efficiently utilizes an amount of existing lubricating oil, it is unnecessary to increase an amount of lubricating oil. Thus, an increase in stirring resistance due to an increase in the amount of lubricating oil is not caused. As a result, lubrication performance can be improved without increasing drive loss.

According to another aspect of the oil gutter according to the present invention, the re-supply member has a first re-introduction section and a first re-supply section. The first re-introduction section is configured to re-introduce at least a portion of the lubricating oil which has been splashed by the first lubrication-requiring member. The first re-supply section is configured to supply the lubricating oil which has been introduced to the first re-introduction section, to the second lubrication-requiring member.

According to the present aspect, the re-supply member can be formed with a simple configuration.

According to another aspect of the oil gutter according to the present invention, the re-supply member is disposed integrally with and in parallel to the flow channel-forming section. The first supply section protrudes, from the flow channel-forming section on a side where the re-supply member is disposed, in a direction intersecting with an extending direction of the flow channel-forming section. The oil gutter is configured to re-introduce, by utilizing the first supply section, at least a portion of the lubricating oil which has been splashed by the first lubrication-requiring member, to the first re-introduction section.

The description "disposed integrally with and in parallel to" in the present invention may include an aspect in which the re-supply member and the flow channel-forming section are integrally formed while being parallelly-disposed, and an aspect in which the re-supply member and the flow channel-forming section are integrated while parallelly-disposed after they are separately formed. Also, the description "protrude in a direction intersecting with" in the present invention may typically correspond to an aspect in which the first supply section protrudes perpendicularly with respect to the extending direction of the flow channel-forming section. The description also may suitably include an aspect in which the first supply section obliquely protrudes with respect to the extending direction of the flow channel-forming section.

According to the present aspect, it is unnecessary to provide a dedicated member only for re-introducing lubricating oil to the first re-introduction section. Thereby, an increase in the number of parts can be suppressed.

According to another aspect of the oil gutter according to the present invention, the first supply section has a guide section configured to guide at least a portion of the lubricating oil which has been splashed by the first lubrication-requiring member and has been impinged on the first supply section, to the first re-introduction section.

According to the present aspect, lubricating oil can be effectively re-introduced to the first re-introduction section.

According to another aspect of the oil gutter according to the present invention, the first re-introduction section is configured as an aperture provided on a bottom surface of the first re-supply section. The guide section is provided on a bottom surface of the first supply section, and configured to change a splashing direction of the lubricating oil which has impinged on the bottom surface and been splashed, to a direction toward the aperture.

According to the present aspect, the splashed lubricating oil can be effectively re-introduced from the aperture.

According to another aspect of the oil gutter according to the present invention, the re-supply member further has a second re-introduction section configured to re-introduce at least a portion of the lubricating oil which has been splashed by the first lubrication-requiring member, and a second re-supply section configured to re-supply the re-introduced lubricating oil which has been introduced to the second re-introduction section, to a third lubrication-requiring member which is disposed at a position nearer than the first lubrication-requiring member with respect to the rotation member.

According to the present aspect, the third supply section supplies the lubricating oil which has been supplied from the second re-supply section, to the third lubrication-requiring member disposed at a position nearer than the first lubrication-requiring member with respect to the rotation member. Therefore, an amount of the existing lubricating oil can be efficiently utilized, and thus, a sufficient amount of lubricating oil can also be supplied to the third lubrication-requiring member.

According to another aspect of the oil gutter according to the present invention, the oil gutter is configured to re-introduce, by the first supply section, at least a portion of the lubricating oil which has been splashed by the first lubrication-requiring member, to the second re-introduction section.

According to the present aspect, it is unnecessary to provide a dedicated member only for re-introducing lubricating oil to the second re-introduction section. Thereby, an increase in the number of parts can be suppressed.

According to another aspect of the oil gutter according to the present invention, the guide section is configured to guide at least a portion of the lubricating oil which has been splashed by the first lubrication-requiring member and impinges on the first supply section, to the second re-introduction section.

According to the present aspect, lubricating oil can be effectively re-introduced to the second re-introduction section.

According to another aspect of the oil gutter according to the present invention, the second re-introduction section is configured as a second aperture provided on a bottom surface of the second re-supply section. The guide section is provided on the bottom surface of the first supply section, and configured to change a splashing direction of the lubricating oil which has impinged and been splashed on the bottom surface, to a direction toward the second aperture.

According to the present aspect, the splashed lubricating oil can be effectively re-introduced from the aperture.

According to another aspect of the oil gutter according to the present invention, the first and second lubrication-requiring members are configured as rotation bodies disposed on a rotation shaft of the rotation member, respectively. The first supply section has a first outflow section and a first shape-following surface section. The second supply section and the first re-supply section each have second and third outflow sections and a second shape-following surface section. The first outflow section is configured to allow lubricating oil to flow out toward the first lubrication-requiring member. The first shape-following surface section is disposed at a downstream side in a rotation direction of the first lubrication-requiring member with respect to the first outflow section, and shaped along at least a portion of an outer circumferential surface of the first lubrication-requiring member such that a predetermined clearance between the first shape-following surface section and the outer circumferential surface of the first lubrication-requiring member is formed. The second and third outflow sections are respectively configured to allow lubricating oil to flow out toward the second lubrication-requiring member. The second shape-following surface section is provided at a downstream side in a rotation direction of the second lubrication-requiring member with respect to the second and third outflow sections, and shaped along at least a portion of an outer circumferential surface of the second lubrication-requiring member such that a predetermined clearance between the second shape-following surface section and the outer circumferential surface of the second lubrication-requiring member is formed.

According to the present aspect, lubricating oil which has been supplied to the rotating first and second lubrication-requiring members can be supplied along the outer circumferential surfaces of the first and second lubrication-requiring members by the first and second shape-following surface sections. As a result, for example, if the first and second lubrication-requiring members are gears, lubricating oil can be effectively conveyed to a meshing section.

According to another aspect of the oil gutter according to the present invention, the second re-supply section includes a fourth outflow section and a third shape-following surface section. The fourth outflow section is configured to allow the lubricating oil to flow out toward the third lubrication-requiring member. The third shape-following surface section is disposed at a downstream side in a rotation direction of the third lubrication-requiring member with respect to the fourth outflow section, and shaped along at least a portion of an outer circumferential surface of the third lubrication-requiring member such that a predetermined clearance between the third shape-following surface section and the outer circumferential surface of the third lubrication-requiring member is formed.

According to the present aspect, lubricating oil which has been supplied to the rotating third lubrication-requiring member can be supplied along the outer circumferential surface of the third lubrication-requiring member by the third shape-following surface section. As a result, for example, if the third lubrication-requiring member is a gear, lubricating oil can be effectively conveyed to a meshing section.

According to another aspect of the oil gutter according to the present invention, the re-supply member has a third re-introduction section configured to re-introduce at least a portion of the lubricating oil which has been splashed by the first lubrication-requiring member. The oil gutter is configured to supply the lubricating oil which has been introduced to the third re-introduction section, to the second lubrication-requiring member via the second supply section.

According to the present aspect, since the second supply section is used as the re-supply member, the re-supply member can be formed with a simple configuration.

According to a second aspect of a transmission according to the present invention, the transmission comprises a first shaft, a second shaft, a gear mechanism, the oil gutter according to any one of the above-mentioned aspects of the present embodiment, and a support wall. The gear mechanism couples the first shaft with the second shaft. The support wall rotatably supports the first shaft and the second shaft. The gear mechanism has a first gear group including a plurality of gears supported by the first shaft, and a second gear group including a plurality of gears meshed with the first gear and supported by the second shaft. The second gear group includes first, second and third gears. The rotation member, the first lubrication-requiring member, and the second lubrication-requiring member are configured by the first, second, and third gears.

According to the present invention, since the oil gutter according to any one of the aspects described above of the present invention is provided, the same effects as that exhibited by the oil gutter of the present invention can be achieved. For example, an effect of being able to improve lubrication performance without increasing drive loss, or the like can be achieved. As a result, both power transmission efficiency and durability can be improved.

According to another aspect of the transmission according to the present invention, the first gear is disposed adjacent to the support wall. The support wall is formed with a recessed portion at a position corresponding to a lateral side of the first gear. Also, the oil gutter is provided with an attachment plate attached to the support wall so as to cover the recessed portion. An outer circumferential surface of the first gear, the recessed portion, and the attachment plate form a closed space. Furthermore, the attachment plate is formed with a communication aperture, as the introduction section, that is configured to allow the closed space to communicate with the flow channel-forming section of the oil gutter.

The "recessed portion" in the present invention may suitably include an aspect in which the recessed portion is formed by directly denting a wall surface of the support wall, and an aspect in which the recessed portion is formed by providing a padding to the wall surface of the support wall.

According to the present aspect, the transmission is configured to supply lubricating oil which has been scooped up by the first gear, to the flow channel-forming section from the closed space via the communication aperture. Thereby, the lubricating oil which has been scooped up by the first gear can be efficiently introduced to the oil gutter. As a result, more lubricating oil can be supplied to the flow channel-forming section, and thus a sufficient amount of lubricating oil can be ensured even in a downstream section of the oil gutter.

According to another aspect of the transmission according to the present invention, the support wall is provided with a narrow-clearance-forming section by which a clearance between the outer circumferential surface of the first gear and the support wall is reduced to be smaller in a location corresponding to an area where the first gear scoops up lubricating oil than in another location not corresponding to the area.

According to the present aspect, scoop up force produced by the first gear can sufficiently act on lubricating oil at the narrow-clearance-forming section, and thus the lubricating oil can be effectively conveyed to the closed space. In addition, since a clearance between the outer circumferential surface of the first gear and the support wall becomes larger in the closed space, lubricating oil is spouted out into the closed space. As a result, lubricating oil can be supplied from the communication aperture to the flow channel-forming section with significant kinetic energy, and thus a sufficient amount of lubricating oil can be effectively conveyed to the downstream section of the oil gutter.

### Advantageous Effects of Invention

According to the present invention, lubrication performance can be improved without increasing drive loss.

### Brief Description of Drawings

FIG. 1 is a schematic configuration diagram illustrating a schematic of a configuration of a transmission 1 including an oil gutter 20 according to an embodiment of the present invention.
FIG. 2 is a perspective view illustrating an exterior appearance of the oil gutter 20.
FIG. 3 is a plan view of the oil gutter 20.
FIG. 4 is a side view of the oil gutter 20 viewed from a direction of the arrow V in FIG. 3.
FIG. 5 is a side view of the oil gutter 20 viewed from a direction of the arrow W in FIG. 3.
FIG. 6 is a cross-sectional view illustrating a cross-section taken along A-A in FIG. 5.
FIG. 7 is an enlarged main section plan view illustrating an enlarged main section of the oil gutter 20.
FIG. 8 is an enlarged main section side view illustrating an enlarged main section of the oil gutter 20.
FIG. 9 is a cross-sectional view illustrating a cross-section taken along line B-B in FIG. 5.
FIG. 10 is a partial cross-sectional illustrating an aspect in which the oil gutter 20 is installed in a case main body 82.
FIG. 11 is a perspective view illustrating an aspect in which the oil gutter 20 is installed in the case main body 82.
FIG. 12 is an arrangement view illustrating a positional relationship between the oil gutter 20 and a drive gear G.
FIG. 13 is a perspective view illustrating an exterior appearance of an adapter plate 86.
FIG. 14 is a front view of the adapter plate 86.
FIG. 15 is an X-X cross-sectional view illustrating a cross-section taken along X-X in FIG. 16.
FIG. 16 is a state view illustrating an aspect in which the oil gutter 20 is mounted in the adapter plate 86.
FIG. 17 is an explanation view illustrating an aspect in which lubricating oil flows in the oil gutter 20.
FIG. 18 is an explanation view illustrating an aspect in which lubricating oil is supplied to a tooth surface of a sixth-speed drive gear G6.
FIG. 19 is an explanation view illustrating an aspect in which lubricating oil impinges on a protrusion section 28b.
FIG. 20 is an explanation view illustrating an aspect in which lubricating oil is re-introduced to a supply section 26 and a re-supply flow channel section 30 via communication apertures 52, 54.
FIG. 21 is an enlarged main section view illustrating an enlarged main section of an oil gutter 120 in a modified example.
FIG. 22 is an enlarged main section view illustrating an enlarged main section of an oil gutter 220 in a modified example.
FIG. 23 is a perspective view illustrating an exterior appearance of an oil gutter 320 in a modified example.
FIG. 24 is an enlarged main section view illustrating an enlarged main section of the oil gutter 320 in a modified example.

### Description of Embodiments

Next, a preferred embodiment of the present invention will be described using embodiments.

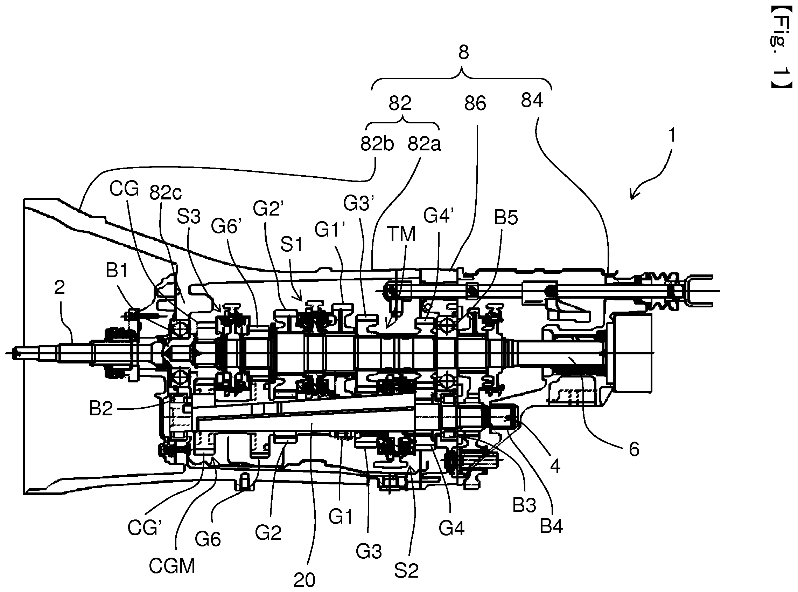

As illustrated in FIG. 1, a transmission 1, including an oil gutter 20 according to the present embodiment, comprises an input shaft 2, a countershaft 4 parallelly disposed with the input shaft 2, an output shaft 6 disposed coaxially with the input shaft 2, a counter gear mechanism CGM coupling the input shaft 2 with the countershaft 4, a transmission mechanism TM coupling the input shaft 2 or the countershaft 4 with the output shaft 6, the oil gutter 20 according to the present embodiment, and a transmission case 8 accommodating these components.

The transmission 1 is configured as a manual transmission for a FR vehicle. This transmission is mounted on a so-called front engine/rear drive (FR) vehicle in which the engine is disposed longitudinally (along a longitudinal direction of the vehicle). In the present embodiment, for the purpose of illustration, a side (a lower side in FIG. 1) where the input shaft 2 is disposed in the longitudinal direction of the transmission 1, is specified as a "front side" or a "forward side", and a side (an upper side in FIG. 1) where the output shaft 6 is disposed, is specified as a "rear side" or a "backward side".

The input shaft 2 is a shaft to which drive force of an engine (not illustrated) is input via a clutch (not illustrated). As illustrated in FIG. 1, the input shaft 2 is rotatably supported by the transmission case 8, specifically, by a case main body 82 (described later) of the transmission case 8, via a bearing B1. A rear end portion of the input shaft 2 (a portion on the output shaft 6 side) is integrally formed with a counter-drive gear CG, as illustrated in FIG. 1.

As illustrated in FIG. 1, the countershaft 4 includes a front-end portion, an intermediate portion, and a rear end portion, which are rotatably supported by the transmission case 8 via a bearing B2, a bearing B3, and a bearing B4, respectively. Specifically, the front-end portion of the countershaft 4 is rotatably supported by the case main body 82 via the bearing B2, the intermediate portion of the countershaft 4 is rotatably supported by an adapter plate 86 (described later) of the transmission case 8 via the bearing B3, and the rear end portion of the countershaft 4 is rotatably supported by an extension case 84 (described later) of the transmission case 8 via the bearing B4.

That is, the countershaft 4 is supported by the transmission case 8 at three portions of the front-end portion, intermediate portion, and the rear end portion of the countershaft 4. The front-end portion of the countershaft 4, that is a portion located backward from a portion supported by the case main body 82 via the bearing B2, is integrally formed with a counter-driven gear CG' meshing with the counter-drive gear CG. The countershaft 4 is an example of an implementation configuration corresponding to the "second shaft" in the present invention. The counter-driven gear CG' is an example of an implementation configuration corresponding to the "second lubrication-requiring member", the "second gear group", and the "third gear" in the present invention.

A gear diameter of the counter-driven gear CG' is formed to be larger than a gear diameter of the counter-drive gear CG. Thereby, rotation of the input shaft 2 with its rotation rate reduced is transmitted to the countershaft 4. The counter gear mechanism CGM includes the counter-driven gear CG' and the counter-drive gear CG.

The output shaft 6 is a shaft for outputting drive force. As illustrated in FIG. 1, one end of the output shaft 6 is inserted into an inner portion of the input shaft 2, and rotatably supported not only by the input shaft 2 via a pilot bearing (not illustrated) but also by the adapter plate 86 via a bearing B5.

A rear end portion of the output shaft 6 is supported by the extension case 84 via a sleeve yoke of a propeller shaft (not illustrated). That is, the output shaft 6 is supported by the input shaft 2 at a front-end portion of the output shaft 6, and is supported by the transmission case 8 at two portions of an intermediate portion and the rear end portion of the output shaft 6. The output shaft 6 is an example of an implementation configuration corresponding to "the first shaft" in the present invention.

As illustrated in FIG. 1, the transmission mechanism TM includes: a plurality of drive gears G (G1 to G4, and G6) which are provided on the countershaft 4; a plurality of driven gears G' (G1' to G4' and G6') which are provided on the output shaft 6 and meshing with the drive gears G; and a plurality of synchro mechanisms S1 to S3 which selectively fix, of the drive gears G and the driven gears G', a gear (idling gear) rotatably provided with respect to the countershaft 4 or the output shaft 6. The transmission mechanism TM is an example of an implementation configuration corresponding to the "gear mechanism" in the present invention. The drive gears G are an example of an implementation configuration corresponding to the "second gear group" in the present invention. The driven gears G' are an example of an implementation configuration corresponding to the "first gear group" in the present invention.

As illustrated in FIG. 1, the drive gears G include a sixth-speed drive gear G6, a second-speed drive gear G2, a first-speed drive gear G1, a third-speed drive gear G3, and a fourth-speed drive gear G4 disposed in this order, from the front side (a left side in FIG. 1) on the countershaft 4. The sixth-speed drive gear G6, the second-speed drive gear G2, and the first-speed drive gear G1 are fixed gears integrally formed with the countershaft 4, or fixed with the countershaft 4 by spline fitting. The third-speed drive gear G3 and the fourth-speed drive gear G4 are idling gears relatively-rotatably disposed with respect to the countershaft 4. The second-speed drive gear G2 is an example of an implementation configuration corresponding to the "third lubrication-requiring member" in the present invention. The fourth-speed drive gear G4 is an example of an implementation configuration corresponding to the "rotation member" and the "first gear" in the present invention. The sixth-speed drive gear G6 is an example of an implementation configuration corresponding to the "first lubrication-requiring member" and the "second gear" in the present invention.

The driven gears G' include a sixth-speed driven gear G6', a second-speed driven gear G2', a first-speed driven gear G1', a third-speed driven gear G3', and a fourth-speed driven gear G4' disposed in this order, from the front side (the left side in FIG. 1) on the output shaft 6. The sixth-speed driven gear G6', the second-speed driven gear G2', and the first-speed driven gear G1' are idling gears relatively-rotatably disposed with respect to the output shaft 6. The third-speed driven gear G3' and the fourth-speed driven gear G4' are fixed gears fixed with the output shaft 6 by spline fitting.

The synchro mechanism S1 is disposed between the second-speed driven gear G2' and the first-speed driven gear G1' on the output shaft 6. The synchro mechanism S2 is disposed between the third-speed drive gear G3 and the fourth-speed drive gear G4 on the countershaft 4. The synchro mechanism S3 is disposed on the front side (the left side in FIG. 1) of the sixth-speed driven gear G6' on the output shaft 6, that is, between the counter-drive gear CG and the sixth-speed driven gear G6'.

The second-speed driven gear G2' or the first-speed driven gear G1' is fixed on the output shaft 6 by the synchro mechanism S1. As a result, drive force transmitted from the input shaft 2 to the countershaft 4 is converted into torque corresponding to first-speed or second-speed, and then transmitted to the output shaft 6. Similarly, the third-speed drive gear G3 or the fourth-speed drive gear G4 is fixed with the countershaft 4 by the synchro mechanism S2, thus, drive force from the engine is converted into torque corresponding to third-speed or fourth-speed, and then transmitted to the output shaft 6. The sixth-speed driven gear G6' is fixed with the output shaft 6 by the synchro mechanism S3. Thereby, drive force from the engine is converted into torque corresponding to sixth-speed, and then transmitted to the output shaft 6. Note that the synchro mechanism S3 can fix the counter-drive gear CG to the output shaft 6. In other words, the synchro mechanism S3 can directly-couple the input shaft 2 with the output shaft 6. Thereby, drive force (corresponding to the fifth-speed) from the engine is transmitted to the output shaft 6 as is.

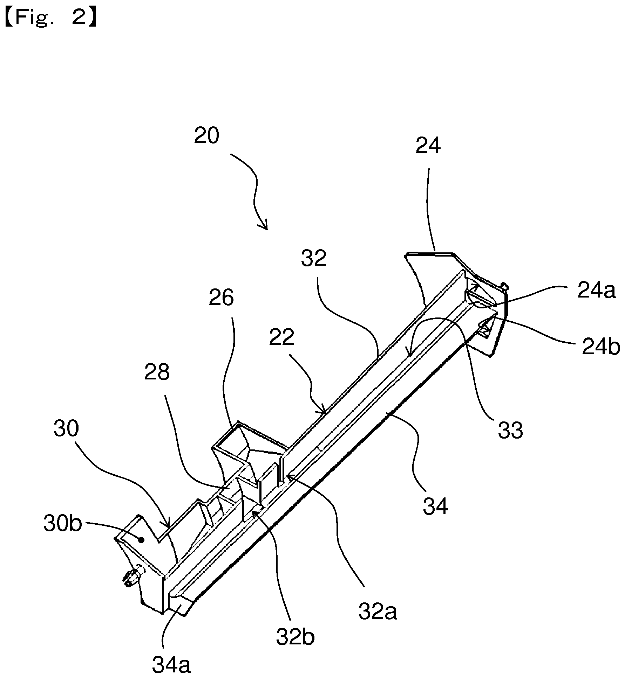

As illustrated in FIG. 2, the oil gutter 20 comprises a flow channel-forming section 22, an introduction plate 24, supply sections 26, 28, and a re-supply flow channel section 30. The flow channel-forming section 22 is formed in a long shape. The introduction plate 24 is provided on one end of the flow channel-forming section 22 in a longitudinal direction thereof. The supply sections 26, 28 and the re-supply flow channel section 30 are provided on another end side of the flow channel-forming section 22 in the longitudinal direction thereof. In the followings, for the purpose of illustration, an introduction plate 24 side (the one side in the longitudinal direction) of the oil gutter 20 in a longitudinal direction thereof is specified as "the upstream" or "the upstream side". A re-supply flow channel section 30 side (the other side of the longitudinal direction) of the oil gutter 20 in the longitudinal direction thereof is specified as "the downstream" or "the downstream side".

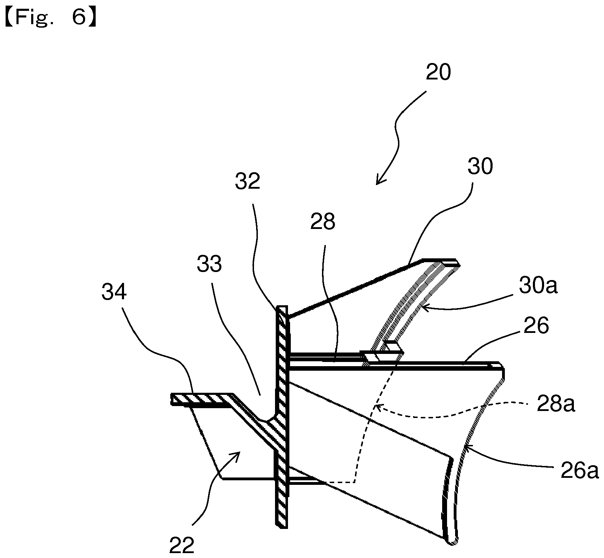

As illustrated in FIG. 6, the flow channel-forming section 22 comprises a upright wall 32 and a lateral wall 34 which is provided orthogonal to the upright wall 32. As illustrated in FIG. 6, the lateral wall 34 is coupled with a substantially central portion of the upright wall 32 in a height direction thereof (a vertical direction in FIG. 6).

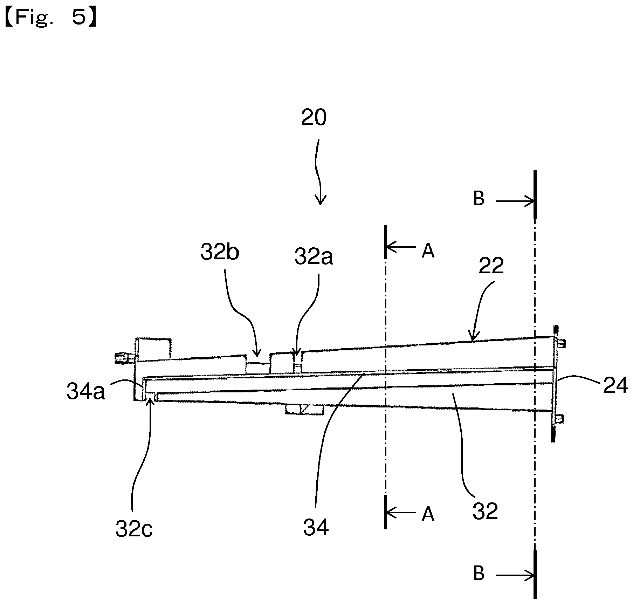

More specifically, as illustrated in FIG. 6, the lateral wall 34 obliquely extends from the substantially central portion of the upright wall 32 in the height direction (the vertical direction in FIG. 6), then, extends outward in a direction perpendicular to the upright wall 32. As a result, as illustrated in FIGS. 2, 3, 6 and 9, a groove 33 is formed over an entire area from the upstream side to the downstream side, at a connection part of the upright wall 32 and the lateral wall 34. As illustrated in FIGS. 2 and 5, the lateral wall 34 has a bent portion 34a that bends downward at a downstream end portion thereof (a lower side in FIG. 5).

As illustrated in FIG. 5, notches 32a, 32b opened upward (on an upper side in FIG. 5) are formed in the upright wall 32 on the slightly downstream side (a left side in the FIG. 5) with respect to the central portion of the upright wall 32 in a longitudinal direction thereof. The notches 32a, 32b are formed to have a depth reaching the lateral wall 34. A notch 32c opened downward (on the lower side in the FIG. 5) is formed at a downstream end portion of the upright wall 32. The notch 32c is provided adjacent to the bent portion 34a of the lateral wall 34, and is disposed on the upstream side of the bent portion 34a.

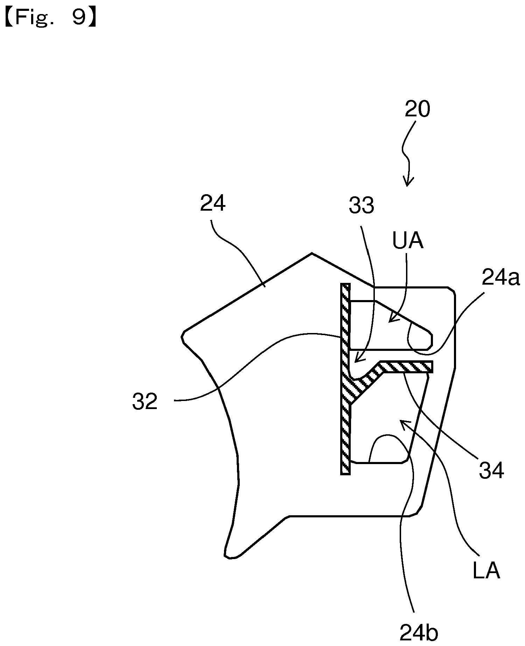

As illustrated in FIGS. 2 and 9, the introduction plate 24 is integrally coupled with the flow channel-forming section 22 so as to be orthogonal to the longitudinal direction of the flow channel-forming section 22. The introduction plate 24 is an example of an implementation configuration corresponding to the "introduction section" and the "attachment plate" in the present invention.

As illustrated in FIG. 9, the introduction plate 24 is formed with two apertures 24a, 24b. The aperture 24a is provided corresponding to, of the areas defined by the upright wall 32 and the lateral wall 34, the upper area UA which is on a side where the groove 33 is formed. The aperture 24b is provided corresponding to, of the areas defined by the upright wall 32 and the lateral wall 34, the lower area LA which is on the opposite side to the upper area UA. Each of the apertures 24a, 24b is an example of an implementation configuration corresponding to the "communication aperture" in the present invention.

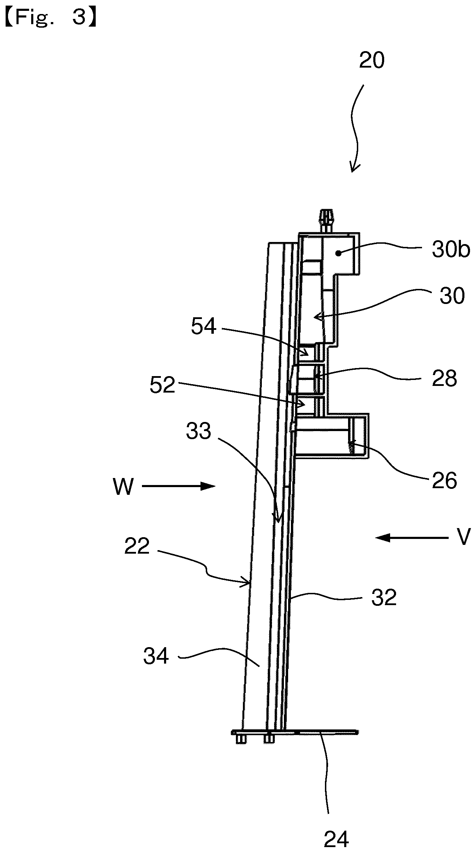

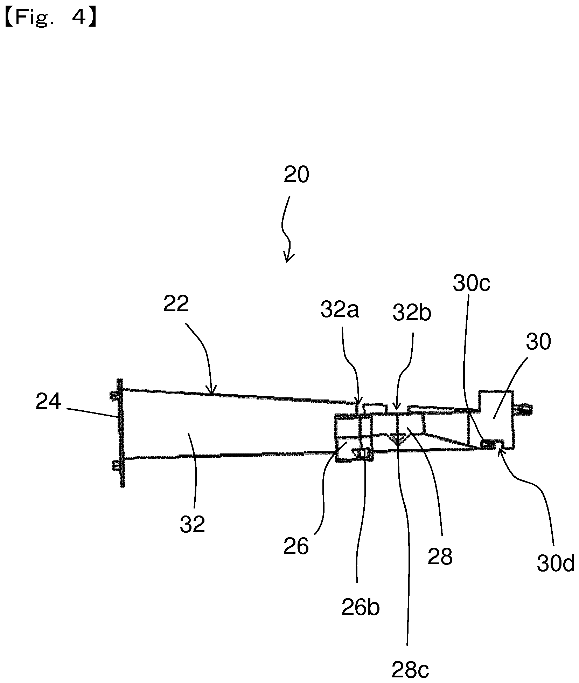

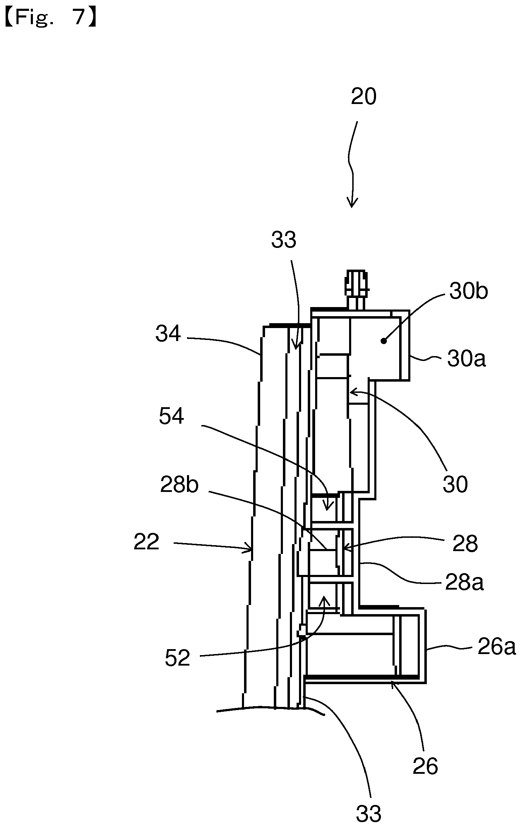

As illustrated in FIGS. 2 to 4, and FIGS. 7 and 8, the supply sections 26, 28 and the re-supply flow channel section 30 are disposed in the flow channel-forming section 22, in this order from the upstream side to the downstream side. As illustrated in FIGS. 3 and 7, the supply section 26 is integrally coupled with the upright wall 32 so as to protrude in an opposite direction (a right direction in FIGS. 3 and 7) with respect to an extending direction of the lateral wall 34 (a left direction in FIGS. 3 and 7).

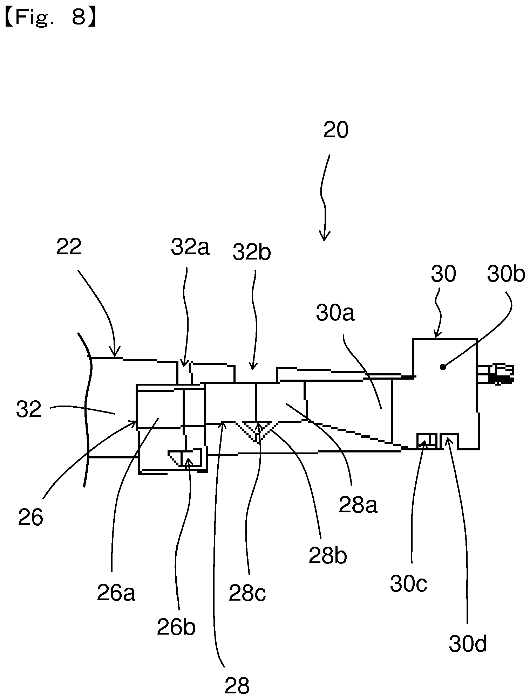

The supply section 26 has a gutter shape. As illustrated in FIG. 8, an aperture 26b is formed at a lower end portion of a protruding end wall 26a which constitutes the supply section 26. As illustrated in FIG.6, the protruding end wall 26a has a curved surface shape convex toward the upright wall 32 side. A curvature radius of the protruding end wall 26a is slightly larger than a curvature radius of an outer circumferential surface of the second-speed drive gear G2. Note that the supply section 26 is provided at a position corresponding to the notch 32a. The notch 32a and the supply section 26 are an example of an implementation configuration corresponding to the "second re-supply section" in the present invention. The aperture 26b is an example of an implementation configuration corresponding to the "fourth outflow section" in the present invention. The protruding end wall 26a is an example of an implementation configuration corresponding to the "third shape-following surface section" in the present invention.

As illustrated in FIGS. 3 and 7, the supply section 28 is integrally coupled with the upright wall 32 so as to protrude in the same direction (the right direction in FIGS. 3 and 7) as a protruding direction of the supply section 26. The supply section 28 has a gutter shape. As illustrated in FIG. 8, a protrusion section 28b having an inverted isosceles triangle shape in a front view, is formed at a bottom portion of the supply section 28. An aperture 28c is formed at a position which is a lower end portion of a protruding end wall 28a constituting the supply section 28, the position corresponding to the protrusion section 28b. The aperture 28c is an example of an implementation configuration corresponding to the "first outflow section" in the present invention.

As illustrated in FIG. 6, the protruding end wall 28a has a curved surface shape convex toward the upright wall 32 side. A curvature radius of the protruding end wall 28a is slightly larger than a curvature radius of an outer circumferential surface of the sixth-speed drive gear G6. As illustrated in FIG. 7, the protruding end wall 28a extends toward both the upstream side (a lower side in FIG. 7) and the downstream side (an upper side in FIG. 7). The protruding end wall 28a is coupled with the supply section 26 on the upstream side, and coupled with the re-supply flow channel section 30 on the downstream side. Note that the supply section 28 is provided at a position corresponding to the notch 32b. The notch 32b and the supply section 28 are an example of an implementation configuration corresponding to the "first supply section" in the present invention. The protruding end wall 28a is an example of an implementation configuration corresponding to the "first shape-following surface section" in the present invention. The protrusion section 28b is an example of an implementation configuration corresponding to the "guide section" in the present invention.

As illustrated in FIGS. 3 and 7, the re-supply flow channel section 30 is integrally coupled with the upright wall 32 so as to protrude in the same direction (the right direction in FIGS. 3 and 7) as each of protruding directions of the supply sections 26, 28. The re-supply flow channel section 30 has a gutter shape. As illustrated in FIG. 7, the re-supply flow channel section 30 extends from a position adjacent to the supply section 28 to a position corresponding to a downstream end portion of the flow channel-forming section 22. As illustrated in FIG. 8, a bottom wall of the re-supply flow channel section 30 has an inclined surface which is inclined downward toward the downstream side.

As illustrated in FIG.6, a protruding end wall 30a configuring the re-supply flow channel section 30 has a curved surface shape convex towards the upright wall 32 side. A curvature radius of the protruding end wall 30a is slightly larger than a curvature radius of an outer circumferential surface of the counter-driven gear CG'. Note that, as illustrated in FIG. 8, a protruding piece section 30b which is higher than the other portions in a height direction (an upper direction in FIG. 8) is provided at a downstream end portion of the protruding end wall 30a.

As illustrated in FIG. 8, an aperture 30c and a notch 30d are formed at a lower end portion of the protruding end wall 30a. The notch 30d communicates with the notch 32c formed on the upright wall 32. The re-supply flow channel section 30 is an example of an implementation configuration corresponding to the "first re-supply section" in the present invention. The protruding end wall 30a is an example of an implementation configuration corresponding to the "second shape-following surface section" in the present invention. The aperture 30c is an example of an implementation configuration corresponding to the "third outflow section" in the present invention. The notch 30d and the notch 32c are an example of an implementation configuration corresponding to the "second supply section" and the "second outflow section" in the present invention.

As illustrated in FIG. 7, communication apertures 52, 54 are formed in the supply section 26 and the re-supply flow channel section 30, respectively. The communication aperture 52 is disposed on the supply section 26 side of a side wall which is a coupling section of the supply section 28 and the supply section 26 and constituting the supply section 28. The communication aperture 52 is configured to allow the inside of the supply section 26 to communicate with the outside of the supply section 26. The communication aperture 54 is disposed on the re-supply flow channel section 30 side of a side wall which is a coupling section of the supply section 28 and the re-supply flow channel section 30 and constituting the supply section 28. The communication aperture 54 is configured to allow the inside of the re-supply flow channel section 30 to communicate with the outside of the re-supply flow channel section 30. That is, the communication apertures 52, 54 are disposed on the both sides (in a vertical direction in FIG. 7) of the supply section 28 so as to sandwich the protrusion section 28b of the supply section 28. The communication aperture 52 and the communication aperture 54 are an example of an implementation configuration corresponding to the "second re-introduction section" and the "first re-introduction section" in the present invention. The communication aperture 54 and re-supply flow channel section 30 as well as the communication aperture 52 and the supply section 26 are an example of an implementation configuration corresponding to the "re-supply member" in the present invention.

As illustrated in FIG. 1, the transmission case 8 comprises the case main body 82, the extension case 84, and the adapter plate 86 which is sandwiched between the case main body 82 and the extension case 84. The case main body 82, the extension case 84, and the adapter plate 86 form an accommodating chamber which accommodates the transmission mechanism TM and the oil gutter 20. A lower portion of the accommodating chamber is configured to accumulate lubricating oil.

As illustrated in FIG. 1, the case main body 82 comprises a cylindrical section 82a forming the accommodating chamber, and a clutch housing section 82b accommodating the clutch (not illustrated). The cylindrical section 82a and the clutch housing section 82b are partitioned by a partition wall 82c.

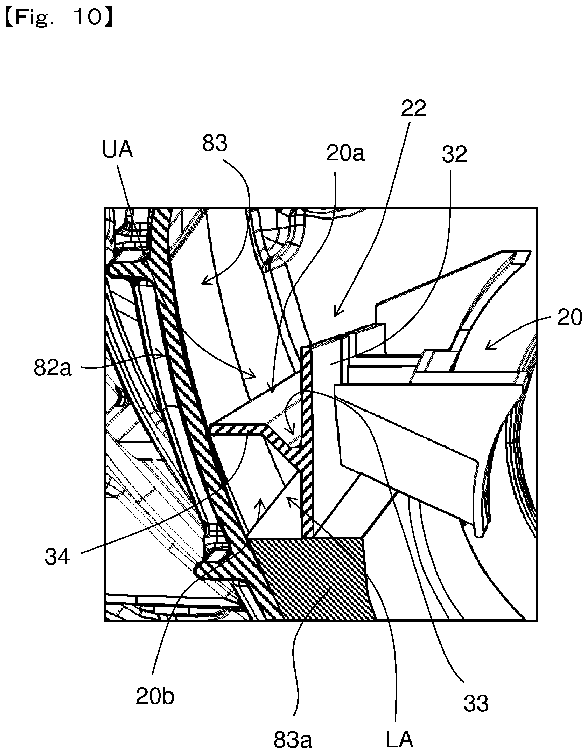

As illustrated in FIG. 10, a step section 83a is integrally provided at a lower portion of an interior wall surface 83 of the cylindrical section 82a. The step section 83a is formed over an entire area of the cylindrical section 82a in a longitudinal direction thereof. As illustrated in FIGS. 10 to 12, the oil gutter 20 is installed on the step section 83a. A length of the step section 83a in an extending direction thereof is slightly longer than a length of the oil gutter 20 in the longitudinal direction thereof.

As illustrated in FIG. 10, in a state where the oil gutter 20 is installed on the step section 83a, a lower end of the upright wall 32 of the oil gutter 20 comes into contact with the step section 83a, and a front edge of the lateral wall 34 comes into contact with the interior wall surface 83 of the cylindrical section 82a. As a result, a tubular flow channel 20b is formed in the lower area LA of the flow channel-forming section 22 by the upright wall 32, the lateral wall 34, the interior wall surface 83 of the cylindrical section 82a, and the step section 83a. A gutter-shaped flow channel 20a being opened on an upper side thereof (an upper side in FIG. 10) is also formed in the upper area UA of the flow channel-forming section 22 by the upright wall 32, the lateral wall 34, and the interior wall surface 83 of the cylindrical section 82a.

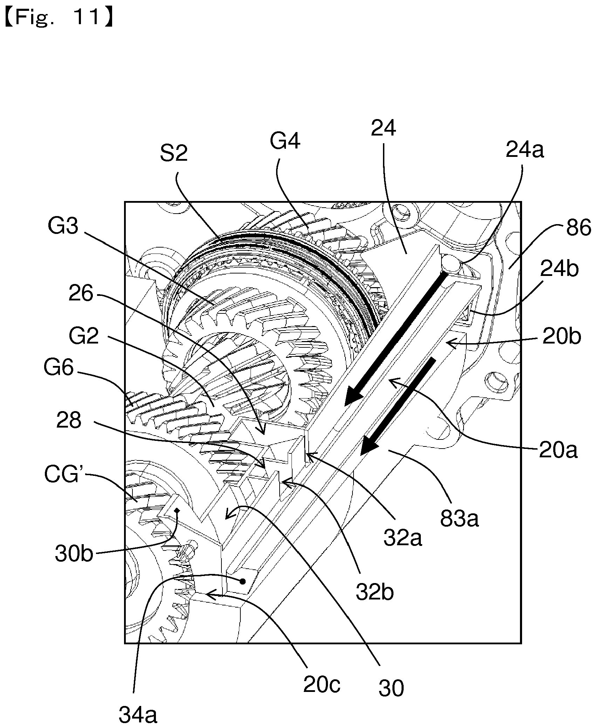

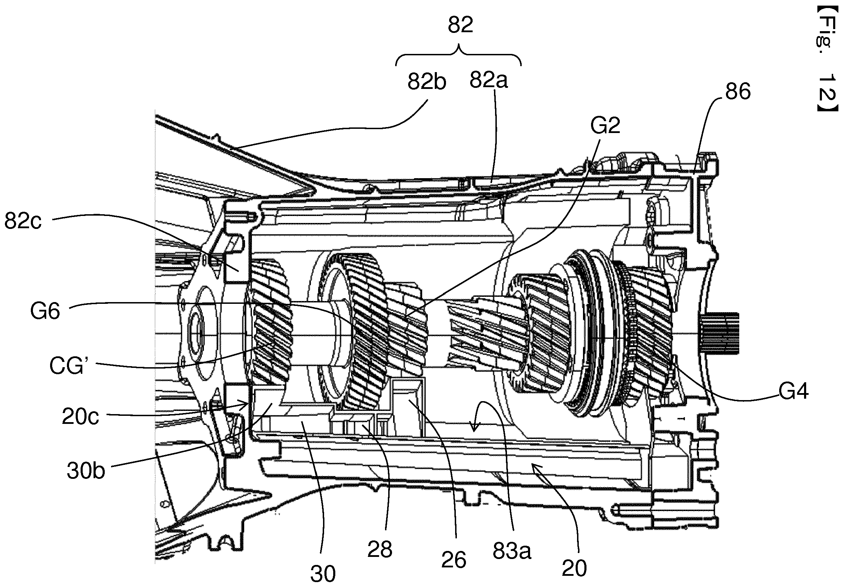

As illustrated in FIGS. 11 and 12, in the state where the oil gutter 20 is installed on the step section 83a, the supply section 26, the supply section 28, and the re-supply flow channel section 30 are disposed at positions corresponding to the second-speed drive gear G2, the sixth-speed drive gear G6, and the counter-driven gear CG', respectively. The protruding end walls 26a, 28a, 30a (of 26, 28, 30) of the supply sections 26, 28 and the re-supply channel section 30 are opposed to the outer circumferential surfaces (tooth surface) of the second-speed drive gear G2, the sixth-speed drive gear G6, and the counter-driven gear CG', respectively, with predetermined clearances therebetween.

As illustrated in FIG. 11, in the state where the oil gutter 20 being installed on the step section 83a, a clearance path 20c is formed in a space between the partition wall 82c (see FIG. 12) and a downstream end portion of the oil gutter 20. The clearance path 20c is opened toward the outer circumferential surface (tooth surface) of the counter-driven gear CG'. The clearance path 20c is an example of an implementation configuration corresponding to the "second supply section" and the "second outflow section" in the present invention.

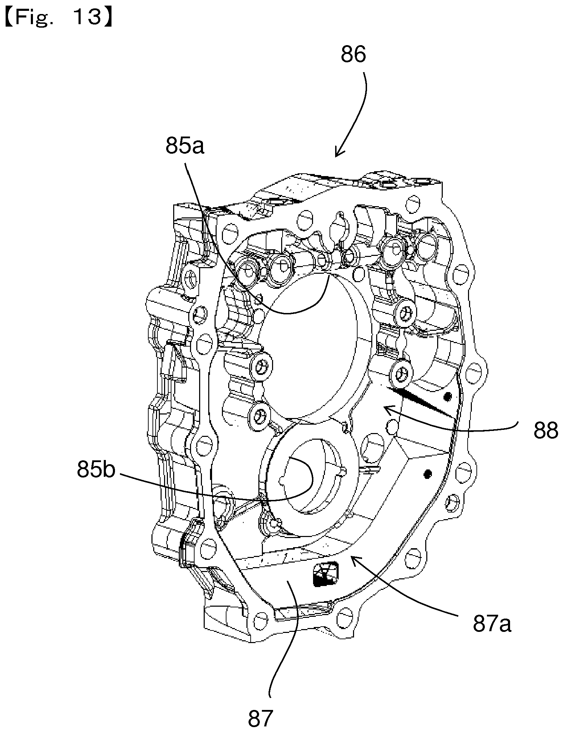

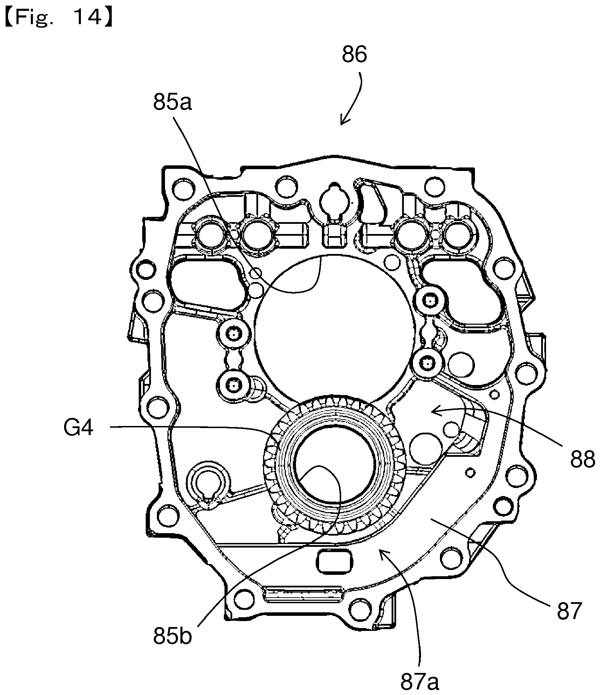

As illustrated in FIGS. 13 and 14, the adapter plate 86 is a plate member. A central portion of the adapter plate 86 is formed with mounting holes 85a, 85b for mounting the bearings B3, B5. The mounting holes 85a, 85b are parallelly disposed in a vertical direction (a vertical direction in FIG. 13). The adapter plate 86 is an example of an implementation configuration corresponding to the "support wall" in the present invention.

As illustrated in FIGS. 13 and 14, a lower portion of the adapter plate 86 is provided with a padding section 87 that raises a bottom portion of the accommodating chamber. As illustrated in FIG. 14, the padding section 87 has a narrow-clearance-forming section 87a by which a clearance between the padding section 87 and the outer circumferential surface (tooth surface) of the fourth-speed drive gear G4 is reduced to be smaller than the other area. The clearance between the padding section 87 and the outer circumferential surface (tooth surface) of the fourth-speed drive gear G4 gradually becomes greater as it advances from the narrow-clearance-forming section 87a toward a recessed portion 88 (described later).

As illustrated in FIGS. 13 and 14, the padding section 87 of the adapter plate 86 is provided with the recessed portion 88. The recessed portion 88 is disposed at a position corresponding to a right side of the mounting hole 85b (a right side in FIGS. 13 and 14), and is formed by notching on a mounting hole 85b side so as to have a substantially fallen U-shape in a front view.

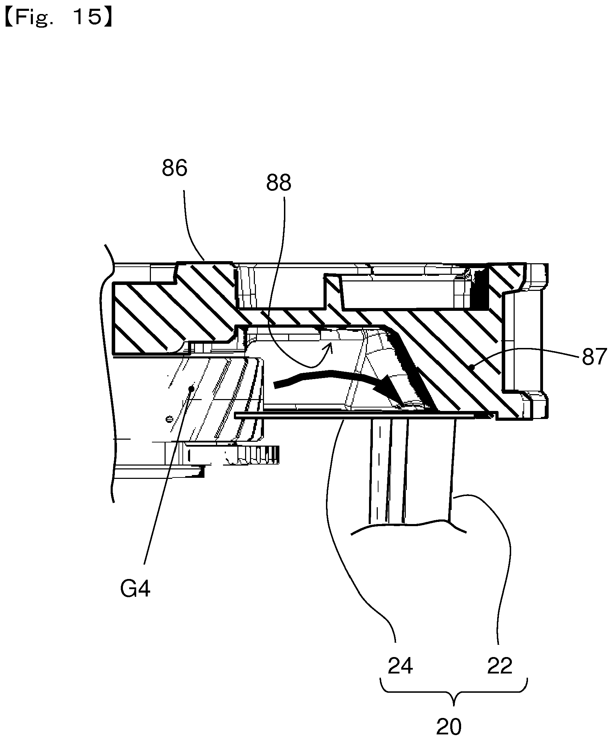

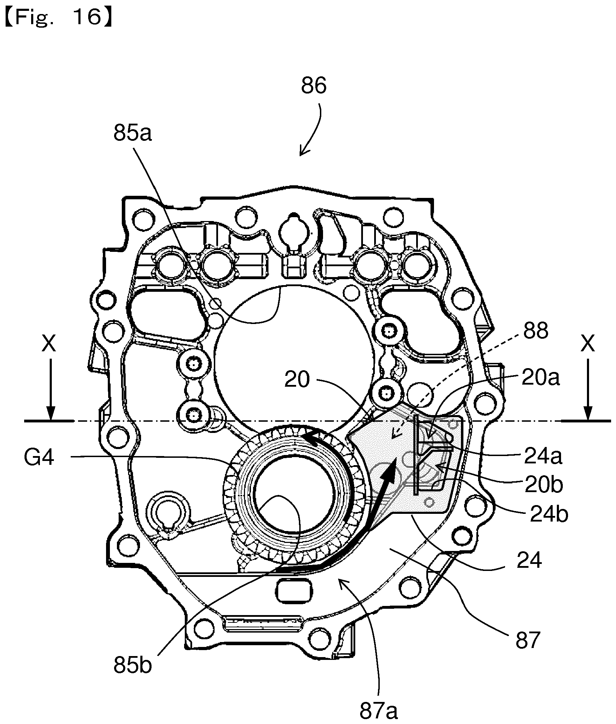

The recessed portion 88 is closed by the oil gutter 20 being attached to the adapter plate 86. Specifically, as illustrated in FIGS. 15 and 16, the recessed portion 88 is covered with the introduction plate 24 of the oil gutter 20. A closed space is formed by the outer circumferential surface (tooth surface) of the fourth-speed drive gear G4, the recessed portion 88, and the introduction plate 24. This closed space communicates with the gutter-shaped flow channel 20a and the tubular flow channel 20b of the oil gutter 20 via the apertures 24a, 24b of the introduction plate 24.

In the followings, an operation of the transmission 1 in such a configuration is explained. Particularly, an operation in which the oil gutter 20 supplies lubricating oil to the lubrication-requiring members such as the second-speed drive gear G2, the sixth-speed drive gear G6, and the counter-driven gear CG', is explained.

When the transmission 1 is actuated and the rotation of the input shaft 2 is transmitted to the output shaft 6 via the countershaft 4, the fourth-speed drive gear G4 rotates counterclockwise, as illustrated in FIG. 16. Thereby, the lubricating oil accumulated in the accommodating chamber is scooped up by the fourth-speed drive gear G4. The scooped-up lubricating oil receives sufficient scooping up force of the fourth-speed drive gear G4 by virtue of the narrow-clearance-forming section 87a, and then is swiftly spouted out into the closed space.

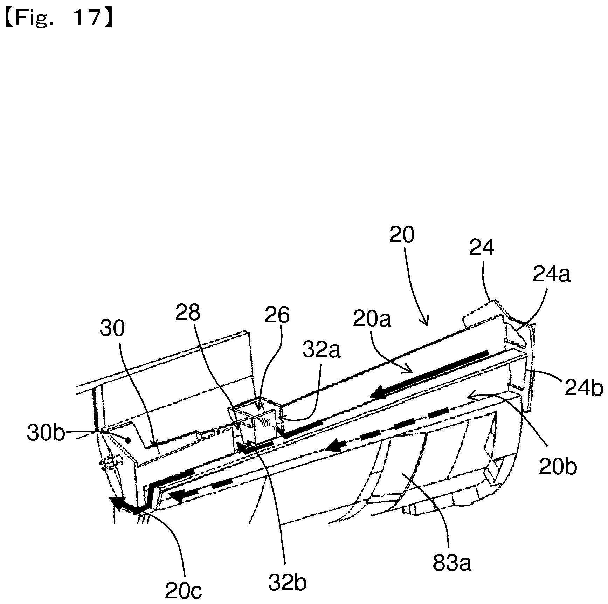

The lubricating oil which has been spouted out into the closed space is introduced from the apertures 24a, 24b of the introduction plate 24 to the gutter-shaped flow channel 20a and the tubular flow channel 20b. As illustrated in FIGS. 11 and 17, the lubricating oil which has been introduced to the gutter-shaped flow channel 20a is supplied to the supply section 26 via the notch 32a, and is also supplied to the supply section 28 via the notch 32b (solid arrow in FIG. 17). The remaining lubricating oil is supplied to the clearance path 20c (solid arrow in FIG. 17).

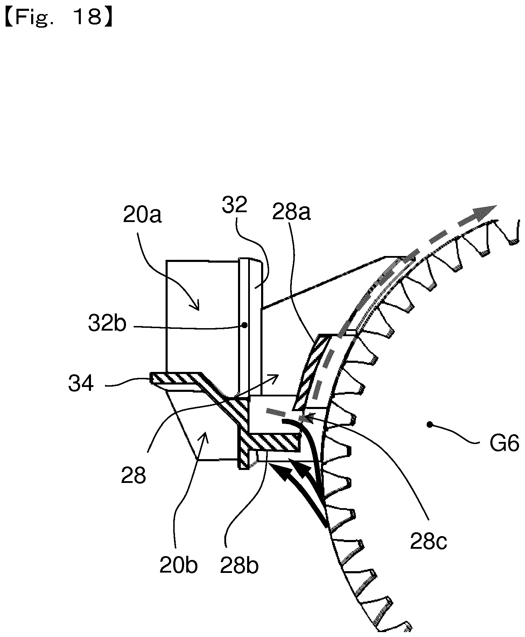

The lubricating oil which has been supplied to the supply section 26 flows out from the aperture 26b toward a tooth surface of the second-speed drive gear G2. The lubricating oil which has been supplied to the supply section 28 flows out from the aperture 28c toward a tooth surface of the sixth-speed drive gear G6. As illustrated in FIG. 18, the lubricating oil which has been supplied to the supply section 28 flows out from the aperture 28c toward the tooth surface of the sixth-speed drive gear G6. The lubricating oil which has been supplied to the clearance path 20c flows out toward a tooth surface of the counter-driven gear CG'.

Meanwhile, the lubricating oil which has been introduced to the tubular flow channel 20b flows to the bent portion 34a, and flows out toward the tooth surface of the counter-driven gear CG' via the notches 32c, 30d (dashed arrow in FIG. 17). Since a downstream end portion of the tubular flow channel 20b is closed by the bent portion 34a, most of the lubricating oil flowing in the tubular flow channel 20b is guided to the notches 32c, 30d.

Each of the protruding end walls 26a, 28a, 30a, which are formed with each of the apertures 26b, 28c, 30d, has a curved surface shape along the outer circumferential surface of each corresponding gear (the second-speed drive gear G2, the sixth-speed drive gear G6, and the counter-driven gear CG'). Therefore, unnecessary splash of the lubricating oil, upon being supplied to the tooth surface on each gear (the second-speed drive gear G2, the sixth-speed drive gear G6, and the counter-driven gear CG'), may be suppressed. Thereby, the lubricating oil may be effectively conveyed to a meshing section of each gear (the second-speed driven gear G2', the sixth-speed driven gear G6', and the counter-drive gear CG) and the corresponding gear (the second-speed drive gear G2, the sixth-speed drive gear G6, and the counter-driven gear CG'). As a result, lubrication performance can be improved.

On the other hand, as illustrated in the solid arrow in FIG. 18, a portion of the lubricating oil which has been splashed from the aperture 28c toward the tooth surface of the sixth-speed drive gear G6 is scooped up by the sixth-speed drive gear G6 when dropping from the aperture 28c, and then impinges on the protrusion section 28b provided at the bottom portion of the supply section 28.

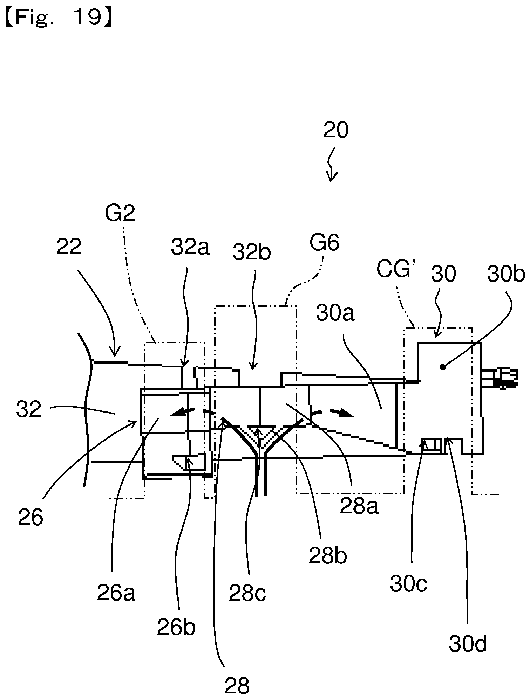

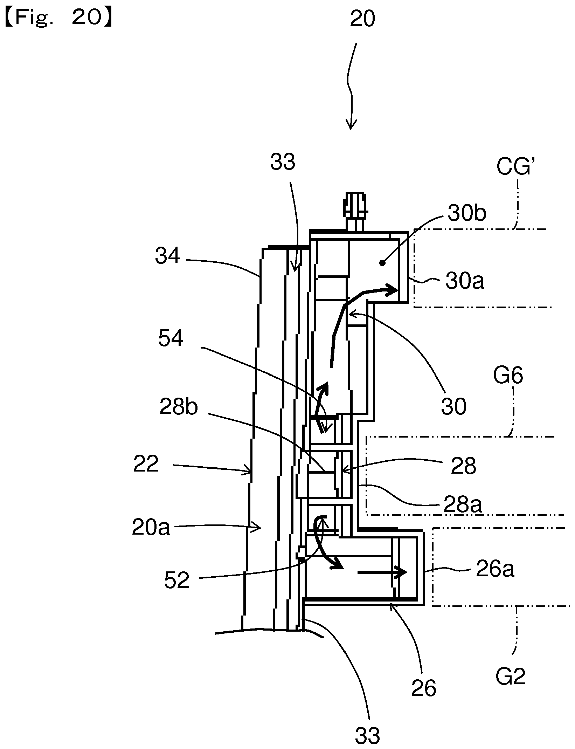

As illustrated in FIG. 19, the splashing direction of the lubricating oil which has impinged on the protrusion section 28b is changed toward the upstream side (a left side in FIG. 19) and the downstream side (a right side in FIG. 19) of the supply section 28. In other words, the splashing direction is changed toward the supply section 26 side and the re-supply flow channel section 30 side. As illustrated in FIG. 19 (dashed arrow) and FIG. 20, the lubricating oil with the changed splashing direction is re-introduced to the supply section 26 and the re-supply flow channel section 30 via the communication apertures 52, 54.

The lubricating oil which has been re-introduced to the supply section 26 flows out again from the aperture 26b toward the tooth surface of the second-speed drive gear G2, and provides lubrication to a meshing section of the second-speed drive gear G2 and the second-speed driven gear G2'. The lubricating oil which has been introduced to the re-supply flow channel section 30 flows out from the aperture 30c toward the tooth surface of the counter-driven gear CG', and provides lubrication to a meshing section of the counter-drive gear CG and the counter-driven gear CG'.

A portion of the lubricating oil which has been splashed from the aperture 28c toward the tooth surface of the sixth-speed drive gear G6 is scooped up by the sixth-speed drive gear G6. The splashing direction of the scooped-up lubricating oil is changed at the protrusion section 28b, and the lubricating oil is re-introduced to the supply section 26 and the re-supply flow channel section 30 via the communication apertures 52, 54. With such a configuration, an amount of lubricating oil in the downstream side portion of the oil gutter 20 can be sufficiently ensured.

The aspect in which the splashing direction of the lubricating oil scooped up by the sixth-speed drive gear G6 is changed at the protrusion section 28b, and the lubricating oil is re-introduced to supply the section 26 and the re-supply flow channel section 30, is an example of an implementation aspect corresponding to the aspect of "to re-introduce, by utilizing the first supply section, at least a portion of the lubricating oil which has been splashed by the first lubrication-requiring member, to the second re-introduction section" in the present invention.

Since the lubricating oil splashed toward tooth surface is re-introduced, lubricating oil can be surely re-introduced to the section 26 and the re-supply flow channel section 30 even in a case where the sixth-speed drive gear G6 is not immersed in the lubricating oil accumulated in an accommodating section. This case is, for example, a case where an amount of lubricating oil is reduced for the purpose of weight saving or reduction in stirring resistance, or a case where lubricating oil has oil surface inclination leaning to a backward side of the transmission 1 due to sudden acceleration or continuous hill-climbing traveling.

A portion of the lubricating oil which has been scooped up by each drive gear G or each synchro mechanism S and then adhered on the interior wall surface 83 of the cylindrical section 82a can be introduced to the gutter-shaped flow channel 20a via the interior wall surface 83. Thereby, lubricating oil can be efficiently collected.

In the present embodiment, the one supply section (the clearance path 20c) and the other supply section (the re-supply flow channel section 30) are provided separately. The one supply section (the clearance path 20c) is configured to supply the lubricating oil which has been scooped up by the fourth-speed drive gear G4, to the counter-driven gear CG'. The other supply section (the re-supply flow channel section 30) is configured to introduce the lubricating oil which has been scooped up by the sixth-speed drive gear G6, and supply the introduced lubricating oil to the counter-driven gear CG'. However, the re-supply flow channel section 30 may also serve as the other supply section, which is configured to supply the lubricating oil scooped up by the fourth-speed drive gear G4 to the counter-driven gear CG'.

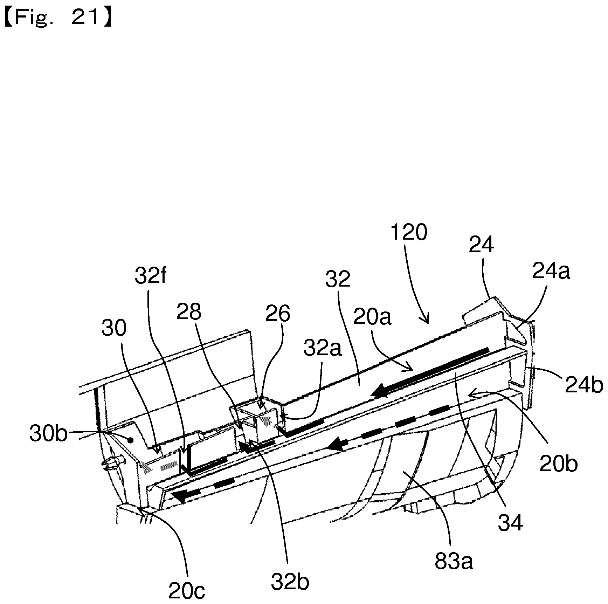

For example, as illustrated in the oil gutter 120 of a modified example exemplified in FIG. 21, a notch 32f opened upward (on an upper side in FIG. 21) may be formed at a portion corresponding to the re-supply flow channel section 30 of the upright wall 32. It is desirable that the notch 32f is formed to have a depth reaching the lateral wall 34, as with the notches 32a, 32b.

In the present embodiment, the oil gutter 20 is configured such that the supply section 26 also serves as the supply section. The supply section 26 is configured to supply the lubricating oil which has been scooped up by the fourth-speed drive gear G4, to the second-speed drive gear G2. The supply section is configured to re-introduce the lubricating oil which has been scooped up by the sixth-speed drive gear G6, and supply the re-introduced lubricating oil to the second-speed drive gear G2. However, the supply section, which is configured to introduce the lubricating oil scooped up by the sixth-speed drive gear G6 and supply the introduced lubricating oil to the second-speed drive gear G2, may be provided separately from the supply section 26.

In the present embodiment, the oil gutter 20 is configured such that lubricating oil is scooped up by the fourth-speed drive gear G4 and the sixth-speed drive gear G6. However, the configuration of the oil gutter 20 is not limited to this. For example, the oil gutter 20 may be configured such that lubricating oil is scooped up by the other drive gear G, driven gear G', or synchro mechanism S.

In the present embodiment, the oil gutter 20 is configured to supply the re-introduced lubricating oil to the second-speed drive gear G2 and the counter-driven gear CG'. However, the configuration of the oil gutter 20 is not limited to this. For example, the oil gutter 20 may be configured such that the re-introduced lubricating oil is supplied to either one of the second-speed drive gear G2 and the counter-driven gear CG', to any one of the other drive gears G, the driven gears G' and the synchro mechanisms S, or to all of the above.

In the present embodiment, the protrusion section 28b has an inverted isosceles triangle shape in a front view. However, the shape of protrusion section 28b is not limited to this. By making each inclined angle of two oblique lines of the protrusion section 28b differ from each other, each amount of lubricating oil introduced to the communication apertures 52, 54 can be made to differ from each other. The protrusion section 28b may have a circular arc (curved surface) shape or a polygon shape instead of a triangle shape.

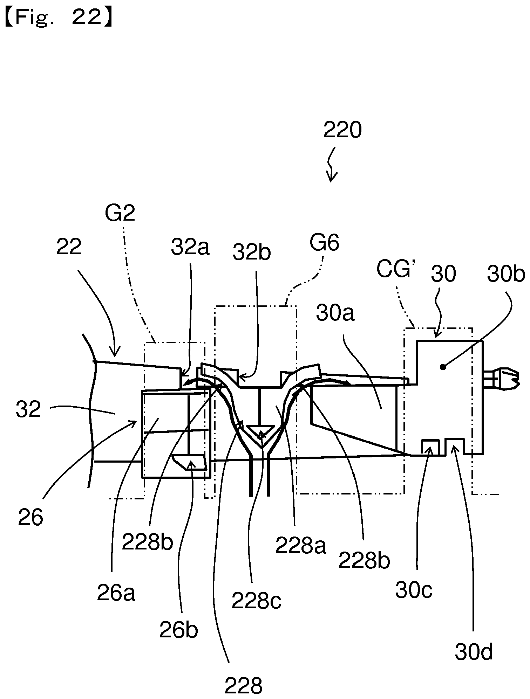

In the present embodiment, the oil gutter 20 is configured to change the splashing direction of the lubricating oil which has been scooped up by the sixth-speed drive gear G6 by utilizing the protrusion section 28b provided on the bottom portion of the supply section 28. However, the configuration of the oil gutter 20 is not limited to this. For example, as exemplified by the oil gutter 220 in a modified example in FIG. 22, a supply section 228 which forms, on the side walls of itself, guide surfaces 228b configured to change the splashing direction of the lubricating oil which has been scooped up by the sixth-speed drive gear G6 may be provided.

The oil gutter 220 in the modified example has the same configuration as the oil gutter 20 according to the present embodiment, except in that the supply section 28 is replaced with the supply section 228. Therefore, of the configuration of the oil gutter 220, the same signs are denoted to the components with the same configuration as that of the oil gutter 20 according to the present embodiment, and the detailed explanations are omitted.

As illustrated in FIG. 22, the supply section 228 of the oil gutter 220 in the modified example has the guide surfaces 228b and an aperture 228c. The guide surfaces 228b are formed by the side walls of the supply section 228. Each of the guide surfaces 228b includes a portion which has an eave shape so as to overlap each of upper apertures of the supply section 26 and the re-supply flow channel section 30. However, each of the portions of the guide surfaces 228b does not necessarily need to overlap each of the upper apertures of the supply section 26 and the re-supply flow channel section 30. The supply section is an example of an implementation aspect corresponding to the "first supply section" in the present invention. The guide surface 228b is an example of an implementation aspect corresponding to the "guide section" in the present invention. The aperture 228c is an example of an implementation aspect corresponding to the "first outflow section" in the present invention.

In the oil gutter 220 in the modified example, each of the supply sections 26, 228 and the re-supply flow channel section 30 is separately disposed in the flow channel-forming section 22. That is, the protruding end wall 228a is not coupled to the supply section 26 and the re-supply flow channel section 30. The oil gutter 220 does not have the communication apertures 52, 54. The protruding end wall 228a has a curved surface shape convex toward the upright wall 32 side, like the oil gutter 20 according to the present embodiment. The protruding end wall 228a is an example of an implementation aspect corresponding to the "first shape-following surface section" in the present invention.

According to this configuration, the splashing direction of the lubricating oil which has been scooped up by the sixth-speed drive gear G6 can be changed by the guide surfaces 228b, and the lubricating oil can be re-introduced from each of the upper apertures of the supply section 26 and the re-supply flow channel section 30.

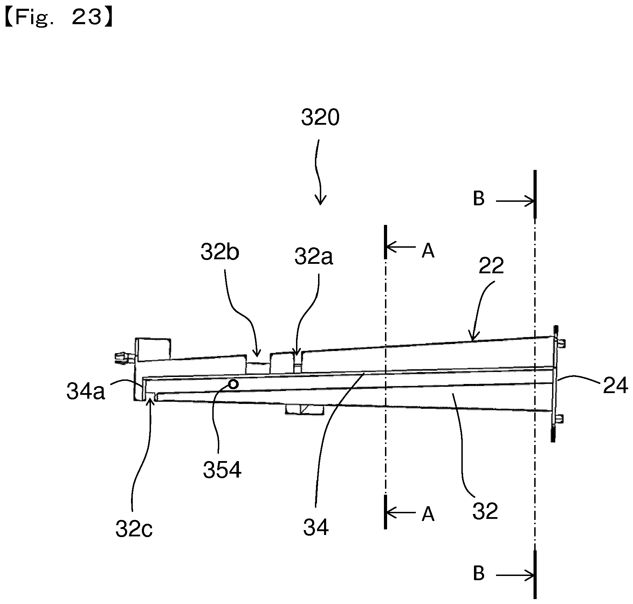

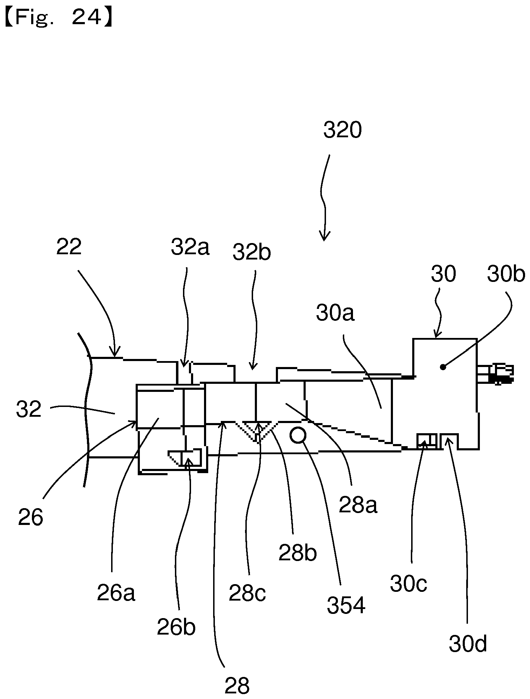

In the present embodiment and the above-mentioned modified example, each the oil gutter is configured to re-introduce the lubricating oil which has been scooped up by the sixth-speed drive gear G6, to the supply section 26 and the re-supply flow channel section 30 via the communication apertures 52, 54, and configured to allow the lubricating oil to flow out from the aperture 30c toward the tooth surface of the counter-driven gear CG'. However, the configuration of the oil gutter is not limited to this. For example, as exemplified in the oil gutter 320 of a modified example in FIGS. 23 and 24, a through hole 354 passing through the upright wall 32 may be formed. The through hole 354 may be formed at a position which is on the slightly downstream side (a left side in FIG. 23 and a right side in FIG. 24) with respect to the notch 32b on the upright wall 32 and is in a lower side (a lower side in FIG. 23) part of the lateral wall 34. Thereby, the lubricating oil which has been scooped up by the sixth-speed drive gear G6 is introduced to the tubular flow channel 20b via the through hole 354, and flows out from the tubular flow channel 20b toward the tooth surface of the counter-driven gear CG' via the notches 32c, 30d. The through hole 354 is an example of an implementation configuration corresponding to the "re-supply member" and the "third re-introduction section" in the present invention.

In the present embodiment, the step section 83a is integrally provided at the lower portion of the interior wall surface 83 of the cylindrical section 82a. However, the configuration of the oil gutter 20 is not limited to this. For example, a step section may be provided by installing a baffle plate at a lower portion of the cylindrical section 82a.

In the present embodiment and the above-mentioned modified examples, each of the gutter-shaped flow channel 20a and the tubular flow channel 20b is formed by the combination of the oil gutter 20, 120, 220, 320 and each of the interior wall surface 83 of the cylindrical section 82a and the step section 83a. However, any one or both of the gutter-shaped flow channel 20a and the tubular flow channel 20b may be formed by the oil gutter 20, 120, 220, 320 alone.

In the present embodiment and the above-mentioned modified examples, the oil gutter is applied to a manual transmission for a FR vehicle. However, the application of the oil gutter is not limited to this. For example, the oil gutter may be applied to an automatic transmission for a FR vehicle, a manual transmission for a FF vehicle, an automatic transmission for a FF vehicle, a reduction gear, a speed-up gear, and the like.

Correspondence relationship between each constituent component of the embodiment and each constituent component of the present invention

### Reference Signs List

- 1: Transmission
- 2: Input shaft
- 4: Countershaft (second shaft)
- 6: Output shaft (first shaft)
- 8: Transmission case
- 20: Oil gutter
- 20a: Gutter-shaped flow channel
- 20b: Tubular flow channel
- 20c: Clearance path (second supply section, second outflow section)
- 22: Flow channel-forming section (flow channel-forming section)
- 24: Introduction plate (introduction section, attachment plate)
- 24a: Aperture (communication aperture)
- 24b: Aperture (communication aperture)
- 26: Supply section (re-supply member, second re-supply section)
- 26a: Protruding end wall (third shape-following surface section)
- 26b: Aperture (fourth outflow section)
- 28: Supply section (first supply section)
- 28a: Protruding end wall (first shape-following surface section)
- 28b: Protrusion section (guide section)
- 28c: Aperture (first outflow section)
- 30: Re-supply flow channel section (re-supply member, first re-supply section)
- 30a: Protruding end wall (second shape-following surface section)
- 30b: Protruding piece section (second supply section)
- 30c: Aperture (third outflow section)
- 30d: Notch (second supply section, second supply section)
- 32: Upright wall
- 32a: Notch (second re-supply section)
- 32b: Notch (first supply section)
- 32c: Notch (second supply section, second outflow section)
- 32f: Notch
- 33: Groove
- 34: Lateral wall
- 34a: Bent portion
- 52: Communication aperture (re-supply member, second re-introduction section)
- 54: Communication aperture (re-supply member, first re-introduction section)
- 82: Case main body
- 82a: Cylindrical section
- 82b: Clutch housing section
- 82: Partition wall
- 83: Interior wall surface
- 83a: Step section
- 84: Extension case
- 85a: Mounting hole
- 85b: Mounting hole
- 86: Adapter plate (support wall)
- 87: Padding section
- 87a: Narrow-clearance-forming section
- 88: Recessed portion
- 120: Oil gutter (oil gutter)
- 220: Oil gutter (oil gutter)
- 228: Supply section (first supply section)
- 228a: Protruding end wall (first shape-following surface section)
- 228b: Guide surface (guide section)
- 228c: Aperture (first outflow section)
- 320: Oil gutter (oil gutter)
- 354: Through hole (re-supply member, third re-introduction section)
- G: Drive gear (second gear group)
- G1: First-speed drive gear
- G2: Second-speed drive gear (lubrication-requiring member)
- G3: Third-speed drive gear
- G4: Fourth-speed drive gear (rotation member, first gear)
- G6: Sixth-speed drive gear (first lubrication-requiring member, second gear)
- CG: Counter-drive gear
- G': Driven gear (first gear group)
- G1': First-speed driven gear
- G2': Second-speed driven gear
- G3': Third-speed driven gear
- G4': Fourth-speed driven gear
- G6': Sixth-speed driven gear
- CG': Counter-driven gear (second lubrication-requiring member, second gear group, third gear)
- TM: Transmission mechanism (gear mechanism)
- CGM: Counter gear mechanism
- B1: Bearing
- B2: Bearing
- B3: Bearing
- B4: Bearing
- B5: Bearing
- S: Synchro mechanism
- S1: Synchro mechanism
- S2: Synchro mechanism
- S3: Synchro mechanism
- UA: Upper area
- LA: Lower area

## Claims

1. An oil gutter (20) configured to introduce lubricating oil which has been scooped up by a rotation member (G4), and supply the introduced lubricating oil to a first lubrication-requiring member (G6) and a second lubrication-requiring member (CG') which is disposed at a position farther than the first lubrication-requiring member with respect to the rotation member, the oil gutter comprising:
an introduction section (24) configured to introduce the lubricating oil which has been scooped up by the rotation member;
a flow channel-forming section (22) forming a flow channel (20a, 20b), and configured to allow the lubricating oil which has been introduced to the introduction section to flow in the flow channel; and
first and second supply sections (28, 20c) provided in the flow channel-forming section at respective positions corresponding to the first and second lubrication-requiring members, and configured to supply the lubricating oil flowing in the flow channel-forming section to the first and second lubrication-requiring members,
**characterized by**
a re-supply member (26, 30, 52, 54, 354) configured to re-introduce at least a portion of the lubricating oil which has been supplied from the first supply section to the first lubrication-requiring member and has been splashed by the first lubrication-requiring member, and re-supply the re-introduced lubricating oil to the second lubrication-requiring member.

2. The oil gutter (20) according to claim 1, wherein
the re-supply member (26, 30, 52, 54, 354) has:
a first re-introduction section (54) configured to re-introduce at least a portion of the lubricating oil which has been splashed by the first lubrication-requiring member (G6); and
a first re-supply section (30) configured to supply the lubricating oil which has been introduced to the first re-introduction section, to the second lubrication-requiring member (CG').

3. The oil gutter (20) according to claim 2, wherein
the re-supply member (26, 30, 52, 54, 354) is disposed integrally with and in parallel to the flow channel-forming section (22),
the first supply section (28) protrudes from the flow channel-forming section on a side where the re-supply member is disposed, in a direction intersecting with an extending direction of the flow channel-forming section, and
the oil gutter is configured to re-introduce, by the first supply section, at least a portion of the lubricating oil which has been splashed by the first lubrication-requiring member (G6), to the first re-introduction section (54).

4. The oil gutter (20) according to claim 2 or 3, wherein
the first supply section (28) has
a guide section (28b, 228b) configured to guide at least a portion of the lubricating oil which has been splashed by the first lubrication-requiring member (G6) and has been impinged on the first supply section, to the first re-introduction section (54).

5. The oil gutter (20) according to claim 4, wherein
the first re-introduction section (54) is provided on a bottom surface of the first re-supply section, and defines an aperture, and
the guide section (28b, 228b) is provided on a bottom surface of the first supply section (28), and configured to change a splashing direction of the lubricating oil which has impinged on the bottom surface and has been splashed, to a direction toward the aperture.

6. The oil gutter (20) according to any one of claims 1 to 5, wherein
the re-supply member (26, 30, 52, 54, 354) further has
a second re-introduction section (52) configured to re-introduce at least a portion of the lubricating oil which has been splashed by the first lubrication-requiring member (G6), and
a second re-supply section (26, 32a) configured to re-supply the lubricating oil which has been introduced to the second re-introduction section, to a third lubrication-requiring member (G2) which is disposed at a position nearer than the first lubrication-requiring member with respect to the rotation member (G4).

7. The oil gutter (20) according to claim 6, wherein
the oil gutter is configured to re-introduce, by the first supply section (28), at least a portion of the lubricating oil which has been splashed by the first lubrication-requiring member (G6), to the second re-introduction section (52).

8. The oil gutter (20) according to claim 6 according to claim 4 or 5, wherein
the guide section (28b, 228b) is configured to guide at least a portion of the lubricating oil which has been splashed by the first lubrication-requiring member (G6) and has been impinged on the first supply section (28), to the second re-introduction section (52).

9. The oil gutter (20) according to claim 8, wherein
the second re-introduction section (52) is configured as a second aperture provided on a bottom surface of the second re-supply section (26, 32a), and
the guide section (28b, 228b) is provided at the bottom surface of the first supply section (28), and configured to change a splashing direction of the lubricating oil which has impinged on the bottom surface, to a direction toward the second aperture.

10. The oil gutter (20) according to any one of claims 2 to 9, wherein
the first and second lubrication-requiring members (G6, CG') are configured as rotation bodies disposed on a rotation shaft of the rotation member (G4), respectively,
the first supply section (28) has
a first outflow section (28c, 228c) configured to allow the lubricating oil to flow out toward the first lubrication-requiring member (G6), and
a first shape-following surface section (28a, 228a) disposed at a downstream side in a rotation direction of the first lubrication-requiring member with respect to the first outflow section, and shaped along at least a portion of an outer circumferential surface of the first lubrication-requiring member so as to form a predetermined clearance between the first shape-following surface section and the outer circumferential surface of the first lubrication-requiring member, and
the second supply section (20c) and the first re-supply section (28) have
second and third outflow sections (20c, 32c, 30c) respectively configured to allow the lubricating oil to flow out toward the second lubrication-requiring member, and
a second shape-following surface section (30a) provided at a downstream side in a rotation direction of the second lubrication-requiring member with respect to the second and third outflow sections, and shaped along at least a portion of an outer circumferential surface of the second lubrication-requiring member such that a predetermined clearance between the second shape-following surface section and the outer circumferential surface of the second lubrication-requiring member is formed.

11. The oil gutter (20) according to any one of claims 6 to 9 and claim 10 according to any one of claims 6 to 9, wherein
the second re-supply section (26, 32a) includes
a fourth outflow section (26b) configured to allow the lubricating oil to flow out toward the third lubrication-requiring member (G2), and
a third shape-following surface section (26a) disposed at a downstream side in a rotation direction of the third lubrication-requiring member with respect to the fourth outflow section, and shaped along at least a portion of an outer circumferential surface of the third lubrication-requiring member such that a predetermined clearance between the third shape-following surface section and the outer circumferential surface of the third lubrication-requiring member is formed.

12. The oil gutter (20) according to claim 1 or 2, wherein
the re-supply member (26, 30, 52, 54, 354) has
a third re-introduction section (354) configured to re-introduce at least a portion of the lubricating oil which has been splashed by the first lubrication-requiring member (G6), and
the re-supply member is configured to supply the lubricating oil which has been introduced to the third re-introduction section, to the second lubrication-requiring member (CG') via the second supply section (20c).

13. A transmission (1), comprising:
a first shaft (6);
a second shaft (4);
a gear mechanism (TM) coupling the first shaft to the second shaft;
the oil gutter (20) according to any one of claims 1 to 12; and
a support wall (86) rotatably supports the first shaft and the second shaft;
wherein
the gear mechanism has
a first gear group (G') including a plurality of gears supported by the first shaft, and
a second gear group (G, CG') including a plurality of gears meshed with the first gear and supported by the second shaft,
the second gear group includes first, second and third gears, and
the rotation member (G4), the first lubrication-requiring member (G6), and the second lubrication-requiring member (CG') are configured by the first, second, and third gears (G4, G6, CG'), respectively.

14. The transmission (1) according to claim 13, wherein
the first gear (G4) is disposed adjacent to the support wall (86),
the support wall is formed with a recessed portion (88) at a position corresponding to a lateral side of the first gear,
the oil gutter (20) is provided with an attachment plate (24) attached to the support wall so as to cover the recessed portion,
an outer circumferential surface of the first gear, the recessed portion, and the attachment plate form a closed space, and
a communication aperture (24a, 24b) is formed within the attachment plate,
the attachment plate being formed as the introduction section (24), and being configured to allow the closed space to communicate with the flow channel-forming section (22) of the oil gutter.

15. The transmission (1) according to claim 13 or 14, wherein
the support wall (86) is provided with a narrow-clearance-forming section (87a) by which a clearance between the outer circumferential surface of the first gear (G4) and the support wall is reduced to be smaller in a location corresponding to an area where the first gear scoops up lubricating oil than the clearance in another location not corresponding to the area.

## Patentansprüche

1. Ölrinne (20), die konfiguriert ist, Schmieröl einzuleiten, das durch ein Drehelement (G4) herausgeschöpft worden ist, und das eingeleitete Schmieröl einem ersten Element (G6), das eine Schmierung benötigt, und einem zweiten Element (CG') zuzuführen, das eine Schmierung benötigt, das an einer Position angeordnet ist, die bezüglich des Drehelements weiter weg als das erste Element liegt, das eine Schmierung benötigt, wobei die Ölrinne aufweist:
einen Einleitungsabschnitt (24), der konfiguriert ist, das Schmieröl einzuleiten, das durch das Drehelement herausgeschöpft worden ist;
einen Abschnitt (22), der einen Strömungskanal bildet, der einen Strömungskanal (20a, 20b) bildet, und konfiguriert ist, es dem Schmieröl zu ermöglichen, das in den Einleitungsabschnitt eingeleitet worden ist, in den Strömungskanal zu fließen; und
einen ersten und zweiten Zufuhrabschnitt (28, 20c), die in dem Abschnitt, der einen Strömungskanal bildet, an jeweiligen Positionen vorgesehen sind, die dem ersten und zweiten Element entsprechen, die eine Schmierung benötigen, und konfiguriert sind, das Schmieröl, das in dem Abschnitt fließt, der einen Strömungskanal bildet, dem ersten und zweiten Element zuzuführen, die eine Schmierung benötigen, **gekennzeichnet durch**
ein Wiederzufuhrelement (26, 30, 52, 54, 354), das konfiguriert ist, mindestens einen Anteil des Schmieröls wieder einzuleiten, das vom ersten Zufuhrabschnitt dem ersten Element zugeführt worden ist, das eine Schmierung benötigt, und durch das erste Element verspritzt worden ist, das eine Schmierung benötigt, und das wieder eingeleitete Schmieröl wieder dem zweiten Element zuzuführen, das eine Schmierung benötigt.

2. Ölrinne (20) nach Anspruch 1, wobei
das Wiederzufuhrelement (26, 30, 52, 54, 354) aufweist:
einen erste Wiedereinleitungsabschnitt (54), der konfiguriert ist, mindestens einen Anteil des Schmieröls wieder einzuleiten, das durch das erste Element (G6), das eine Schmierung benötigt, verspritzt worden ist; und
einen ersten Wiederzufuhrabschnitt (30), der konfiguriert ist, das Schmieröl, das in den ersten Wiedereinleitungsabschnitt eingeleitet worden ist, dem zweiten Element (CG') zuzuführen, das eine Schmierung benötigt.

3. Ölrinne (20) nach Anspruch 2, wobei
das Wiederzufuhrelement (26, 30, 52, 54, 354) integral mit und parallel zum Abschnitt (22) angeordnet, der einen Strömungskanal bildet,
der erste Zufuhrabschnitt (28) aus dem Abschnitt, der einen Strömungskanal bildet, auf einer Seite, auf der das Wiederzufuhrelement angeordnet ist, in eine Richtung vorsteht, die sich mit einer Ausdehnungsrichtung des Abschnitts schneidet, der einen Strömungskanal bildet, und die Ölrinne konfiguriert ist, durch den ersten Zufuhrabschnitt mindestens einen Anteil des Schmieröls, das durch das erste Element (G6) verspritzt worden ist, das eine Schmierung benötigt, wieder zum ersten Wiedereinleitungsabschnitt (54) einzuleiten.

4. Ölrinne (20) nach Anspruch 2 oder 3, wobei
der erste Zufuhrabschnitt (28) aufweist:
einen Führungsabschnitt (28b, 228b), der konfiguriert ist, mindestens einen Anteil des Schmieröls, das durch das erste Element (G6), das eine Schmierung benötigt, verspritzt worden ist und auf den ersten Zufuhrabschnitt aufgeprallt ist, zum ersten Wiedereinleitungsabschnitt (54) zu führen.

5. Ölrinne (20) nach Anspruch 4, wobei
der erste Wiedereinleitungsabschnitt (54) an einer Bodenfläche des ersten Wiederzufuhrabschnitts vorgesehen ist und eine Öffnung definiert, und
der Führungsabschnitt (28b, 228b) an einer Bodenfläche des ersten Zufuhrabschnitts (28) vorgesehen und konfiguriert ist, eine Spritzrichtung des Schmieröls, das auf die Bodenfläche aufgeprallt und verspritzt worden ist, zu einer Richtung zur Öffnung zu ändern.

6. Ölrinne (20) nach einem der Ansprüche 1 bis 5, wobei
das Wiederzufuhrelement (26, 30, 52, 54, 354) ferner einen zweiten Wiedereinleitungsabschnitt (52) aufweist, der konfiguriert ist, mindestens einen Anteil des Schmieröls, das durch das erste Element (G6) verspritzt worden ist, das eine Schmierung benötigt, wieder einzuleiten, und einen zweiten Wiederzufuhrabschnitt (26, 32a), der konfiguriert ist, das Schmieröl, das in den zweiten Wiedereinleitungsabschnitt eingeleitet worden ist, einem dritten Element (G2) wieder zuzuführen, das eine Schmierung benötigt, das an einer Position angeordnet ist, die bezüglich des Drehelements (G4) näher als das erste Element ist, das eine Schmierung benötigt.

7. Ölrinne (20) nach Anspruch 6, wobei
die Ölrinne konfiguriert ist, mindestens einen Anteil des Schmieröls, das durch das erste Element (G6) verspritzt worden ist, das eine Schmierung benötigt, durch den ersten Zufuhrabschnitt (28) wieder in den zweiten Wiedereinleitungsabschnitt (52) einzuleiten.

8. Ölrinne (20) nach Anspruch 6 nach Anspruch 4 oder 5, wobei
der Führungsabschnitt (28b, 228b) konfiguriert ist, mindestens einen Anteil des Schmieröls, das durch das erste Element (G6), das eine Schmierung benötigt, verspritzt worden ist und auf den ersten Zufuhrabschnitt (28) aufgeprallt ist, zum zweiten Wiedereinleitungsabschnitt (52) zu führen.

9. Ölrinne (20) nach Anspruch 8, wobei
der zweite Wiedereinleitungsabschnitt (52) als eine zweite Öffnung konfiguriert ist, die an einer Bodenfläche des zweiten Wiederzufuhrabschnitts (26, 32a) vorgesehen ist, und
der Führungsabschnitt (28b, 228b) an der Bodenfläche des ersten Zufuhrabschnitts (28) vorgesehen und konfiguriert ist, eine Spritzrichtung des Schmieröls, das auf die Bodenfläche aufgeprallt ist, zu einer Richtung zur zweiten Öffnung zu ändern.

10. Ölrinne (20) nach einem der Ansprüche 2 bis 9, wobei
das erste und zweite Element (G6, CG'), die eine Schmierung benötigten, als Drehkörper konfiguriert sind, die jeweils auf einer Drehwelle des Drehelements (G4) angeordnet sind, der erste Zufuhrabschnitt (28) aufweist:
einen ersten Ablaufabschnitt (28c, 228c), der konfiguriert ist, es dem Schmieröl zu ermöglichen, zum ersten Element (G6) abzulaufen, das eine Schmierung benötigt, und
einen ersten formfolgenden Flächenabschnitt (28a, 228a), der bezüglich des ersten Ablaufabschnitts auf einer nachgelagerten Seite in eine Drehrichtung des ersten Elements, das eine Schmierung benötigt, angeordnet ist und längs mindestens eines Abschnitts einer Außenumfangsfläche des ersten Elements, das eine Schmierung benötigt, geformt ist, um einen vorgegebenen Zwischenraum zwischen dem ersten formfolgenden Flächenabschnitt und der Außenumfangsfläche des ersten Elements zu bilden, das eine Schmierung benötigt, und
der zweite Zufuhrabschnitt (20c) und der erste Wiederzufuhrabschnitt (28) aufweisen:
einen zweiten bzw. dritten Ablaufabschnitt (20c, 32c, 30c), die konfiguriert sind, es dem Schmieröl zu ermöglichen, zum zweiten Element abzulaufen, das eine Schmierung benötigt, und
einen zweiten formfolgenden Flächenabschnitt (30a), der bezüglich des zweiten und dritten Ablaufabschnitts auf einer nachgelagerten Seite in eine Drehrichtung des zweiten Elements vorgesehen ist, das eine Schmierung benötigt, und längs mindestens eines Abschnitts einer Außenumfangsfläche des zweiten Elements, das eine Schmierung benötigt, so geformt ist, dass ein vorgegebener Zwischenraum zwischen dem zweiten formfolgenden Flächenabschnitt und der Außenumfangsfläche des zweiten Elements gebildet wird, das eine Schmierung benötigt.

11. Ölrinne (20) nach einem der Ansprüche 6 bis 9 und 10 nach einem der Ansprüche 6 bis 9, wobei
der zweite Wiederzufuhrabschnitt (26, 32a) aufweist:
einen vierten Ablaufabschnitt (26b), der konfiguriert ist, es dem Schmieröl zu ermöglichen, zum dritten Element (G2) abzulaufen, das eine Schmierung benötigt, und
einen dritten formfolgenden Flächenabschnitt (26a), der bezüglich des vierten Ablaufabschnitts auf einer nachgelagerten Seite in eine Drehrichtung des dritten Elements angeordnet ist, das eine Schmierung benötigt, und längs mindestens eines Abschnitts einer Außenumfangsfläche des dritten Elements, das eine Schmierung benötigt, so geformt ist, dass ein vorgegebener Zwischenraum zwischen dem dritten formfolgenden Flächenabschnitt und der Außenumfangsfläche des dritten Elements gebildet wird, das eine Schmierung benötigt.

12. Ölrinne (20) nach Anspruch 1 oder 2, wobei
das Wiederzufuhrelement (26, 30, 52, 54, 354) aufweist:
einen dritten Wiedereinleitungsabschnitt (354), der konfiguriert ist, mindestens einen Anteil des Schmieröls wieder einzuleiten, das durch das erste Element (G6) verspritzt worden ist, das eine Schmierung benötigt, und
das Wiederzufuhrelement konfiguriert ist, das Schmieröl, das in den dritten Wiedereinleitungsabschnitt eingeleitet worden ist, dem zweiten Element (CG'), das eine Schmierung benötigt, über den zweiten Zufuhrabschnitt (20c) zuzuführen.

13. Getriebe (1), das aufweist:
eine erste Welle (6);
eine zweite Welle (4);
ein Zahnradgetriebe (TM), das die erste Welle mit der zweite Welle koppelt;
die Ölrinne (20) nach einem der Ansprüche 1 bis 12; und
eine Haltewand (86), die die erste Welle und die zweite Welle drehbar hält;
wobei
das Zahnradgetriebe aufweist:
eine erste Zahnradgruppe (G'), die mehrere Zahnräder aufweist, die durch die erste Welle gehalten werden, und
eine zweite Zahnradgruppe (G, CG'), die mehrere Zahnräder aufweist, die mit dem ersten Zahnrad in Eingriff stehen und durch die zweite Welle gehalten werden,
die zweite Zahnradgruppe ein erstes, zweites und drittes Zahnrad aufweist, und
das Drehelement (G4), das erste Element (G6), das eine Schmierung benötigt, und das zweite Element (CG'), das eine Schmierung benötigt, durch das erste, zweite bzw. dritte Zahnrad (G4, G6, CG') gebildet werden.

14. Getriebe (1) nach Anspruch 13, wobei
die erste Zahnrad (G4) benachbart zur Haltewand (86) angeordnet ist,
die Haltewand mit einem ausgesparten Abschnitt (88) an einer Position ausgebildet ist, die einer lateralen Seite des ersten Zahnrads entspricht,
die Ölrinne (20) mit einer Befestigungsplatte (24) versehen ist, die an der Haltewand befestigt ist, um den ausgesparten Abschnitt abzudecken,
eine Außenumfangsfläche des ersten Zahnrads, der ausgesparte Abschnitt und die Befestigungsplatte einen geschlossenen Raum bilden, und
eine Verbindungsöffnung (24a, 24b) in der Befestigungsplatte ausgebildet ist,
wobei die Befestigungsplatte als der Einleitungsabschnitt (24) ausgebildet ist und konfiguriert ist, es zu ermöglichen, dass der geschlossene Raum mit dem Abschnitt (22) der Ölrinne in Verbindung steht, der einen Strömungskanal bildet.

15. Getriebe (1) nach Anspruch 13 oder 14, wobei
die Haltewand (86) mit einem Abschnitt (87a), der einen engen Zwischenraum bildet, versehen ist, durch den ein Zwischenraum zwischen der Außenumfangsfläche des ersten Zahnrads (G4) und der Haltewand reduziert wird, so dass er an einer Stelle, die einem Bereich entspricht, in dem das erste Zahnrad Schmieröl herausschöpft, kleiner als der Zwischenraum an einer anderen Stelle ist, die dem Bereich nicht entspricht.

## Revendications

1. Gouttière d'huile (20) prévue pour introduire une huile lubrifiante recueillie par un élément rotatif (G4), et refouler l'huile lubrifiante introduite vers un premier élément exigeant lubrification (G6) et un deuxième élément exigeant lubrification (CG') disposé à un emplacement plus distant que le premier élément exigeant lubrification par rapport à l'élément rotatif, ladite gouttière d'huile comprenant :
une section d'introduction (24) prévue pour introduire l'huile lubrifiante recueillie par l'élément rotatif ;
une section formant canal d'écoulement (22) formant un canal d'écoulement (20a, 20b), et prévue pour permettre à l'huile lubrifiante introduite dans la section d'introduction de s'écouler dans le canal d'écoulement ; et
une première et une deuxième sections d'alimentation (28, 20c) prévues dans la section formant canal d'écoulement à des emplacements respectifs correspondant au premier et au deuxième élément exigeant lubrification, et prévues pour refouler l'huile lubrifiante s'écoulant dans la section formant canal d'écoulement vers le premier et le deuxième éléments exigeant lubrification,
**caractérisée par**
un élément de ré-alimentation (26, 30, 52, 54, 354) prévu pour réintroduire au moins une partie de l'huile lubrifiante refoulée de la première section d'alimentation vers le premier élément exigeant lubrification et projetée par le premier élément exigeant lubrification, et re-refouler l'huile lubrifiante réintroduite vers le deuxième élément exigeant lubrification.

2. Gouttière d'huile (20) selon la revendication 1, où l'élément de ré-alimentation (26, 30, 52, 54, 354) présente
une première section de ré-introduction (54) prévue pour ré-introduire au moins une partie de l'huile lubrifiante projetée par le premier élément exigeant lubrification (G6) ; et
une première section de ré-alimentation (30) prévue pour refouler l'huile lubrifiante introduite dans la première section de ré-introduction vers le deuxième élément exigeant lubrification (CG').

3. Gouttière d'huile (20) selon la revendication 2, où l'élément de ré-alimentation (26, 30, 52, 54, 354) est disposé de manière intégrée et parallèlement à la section formant canal d'écoulement (22),
la première section d'alimentation (28) fait saillie de la section formant canal d'écoulement sur un côté où est disposé l'élément de ré-alimentation dans une direction croisant la direction d'extension de la section formant canal d'écoulement, et où
ladite gouttière d'huile est prévue pour ré-introduire par la première section d'alimentation au moins une partie de l'huile lubrifiante projetée par le premier élément exigeant lubrification (G6) dans la première section de ré-introduction (54).

4. Gouttière d'huile (20) selon la revendication 2 ou la revendication 3, où
la première section d'alimentation (28) présente une section de guidage (28b, 228b) prévue pour conduire vers la première section de ré-introduction (54) au moins une partie de l'huile lubrifiante projetée par le premier élément exigeant lubrification (G6) et ayant contacté la première section d'alimentation.

5. Gouttière d'huile (20) selon la revendication 4, où
la première section de ré-introduction (54) est prévue sur une surface inférieure de la première section de ré-alimentation et définit une ouverture, et
la section de guidage (28b, 228b) est prévue sur une surface inférieure de la première section d'alimentation (28) et pour réorienter vers l'ouverture une direction de projection de l'huile lubrifiante ayant contacté la surface inférieure et ayant été projetée.

6. Gouttière d'huile (20) selon l'une des revendications 1 à 5, où
l'élément de ré-alimentation (26, 30, 52, 54, 354) présente en outre
une deuxième section de ré-introduction (52) prévue pour ré-introduire au moins une partie de l'huile lubrifiante projetée par le premier élément exigeant lubrification (G6), et
une deuxième section de ré-alimentation (26, 32a) prévue pour re-refouler l'huile lubrifiante introduite dans la deuxième section de ré-introduction vers un troisième élément exigeant lubrification (G2) disposé à un emplacement plus proche que le premier élément exigeant lubrification par rapport à l'élément rotatif (G4).

7. Gouttière d'huile (20) selon la revendication 6, où
ladite gouttière d'huile est prévue pour ré-introduire par la première section d'alimentation (28) au moins une partie de l'huile lubrifiante projetée par le premier élément exigeant lubrification (G6) dans la deuxième section de ré-introduction (52).

8. Gouttière d'huile (20) selon la revendication 6 selon la revendication 4 ou la revendication 5, où
la section de guidage (28b, 228b) est prévue pour conduire vers la deuxième section de ré-introduction (52) au moins une partie de l'huile lubrifiante projetée par le premier élément exigeant lubrification (G6) et ayant contacté la première section d'alimentation (28).

9. Gouttière d'huile (20) selon la revendication 8, où
la deuxième section de ré-introduction (52) est configurée comme deuxième ouverture prévue sur une surface inférieure de la deuxième section de ré-alimentation (26, 32a), et la section de guidage (28b, 228b) est prévue sur la surface inférieure de la première section d'alimentation (28), et pour réorienter vers la deuxième ouverture une direction de projection de l'huile lubrifiante ayant contacté la surface inférieure.

10. Gouttière d'huile (20) selon l'une des revendications 2 à 9, où
le premier et le deuxième éléments exigeant lubrification (G6, CG') sont configurés comme corps rotatifs respectivement disposés sur un arbre rotatif de l'élément rotatif (G4),
la première section d'alimentation (28) présente une première section de sortie (28c, 228c) prévue pour permettre à l'huile lubrifiante d'être évacuée vers le premier élément exigeant lubrification (G6), et
une première section de surface à adaptation de forme (28a, 228a) disposée en aval dans le sens de rotation du premier élément exigeant lubrification par rapport à la première section de sortie, et formée sur au moins une partie d'une surface circonférentielle extérieure du premier élément exigeant lubrification de manière à former un intervalle défini entre la première section de surface à adaptation de forme et la surface circonférentielle extérieure du premier élément exigeant lubrification, et
la deuxième section d'alimentation (20c) et la première section de ré-alimentation (28) présentent une deuxième et une troisième sections de sortie (20c, 32c, 30c) respectivement prévues pour permettre à l'huile lubrifiante de s'écouler vers le deuxième élément exigeant lubrification, et
une deuxième section de surface à adaptation de forme (30a) disposée en aval dans le sens de rotation du deuxième élément exigeant lubrification par rapport à la deuxième et la troisième sections de sortie, et formée sur au moins une partie d'une surface circonférentielle extérieure du deuxième élément exigeant lubrification de manière à former un intervalle défini entre la deuxième section de surface à adaptation de forme et la surface circonférentielle extérieure du deuxième élément exigeant lubrification.

11. Gouttière d'huile (20) selon l'une des revendications 6 à 9 et la revendication 10 selon l'une des revendications 6 à 9, où
la deuxième section de ré-alimentation (26, 32a) comprend une quatrième section de sortie (26b) prévue pour permettre à l'huile lubrifiante d'être évacuée vers le troisième élément exigeant lubrification (G2), et
une troisième section de surface à adaptation de forme (26a) disposée en aval dans le sens de rotation du troisième élément exigeant lubrification par rapport à la quatrième section de sortie, et formée sur au moins une partie d'une surface circonférentielle extérieure du troisième élément exigeant lubrification de manière à former un intervalle défini entre la troisième section de surface à adaptation de forme et la surface circonférentielle extérieure du troisième élément exigeant lubrification.

12. Gouttière d'huile (20) selon la revendication 1 ou la revendication 2, où
l'élément de ré-alimentation (26, 30, 52, 54, 354) comprend une troisième section de ré-introduction (354) prévue pour ré-introduire au moins une partie de l'huile lubrifiante projetée par le premier élément exigeant lubrification (G6), et
l'élément de ré-alimentation est prévu pour refouler l'huile lubrifiante introduite dans la troisième section de ré-introduction vers le deuxième élément exigeant lubrification (CG') par la deuxième section d'alimentation (20c) .

13. Transmission (1), comprenant :
un premier arbre (6) ;
un deuxième arbre (4) ;
un engrenage (TM) reliant le premier arbre au deuxième arbre ;
la gouttière d'huile (20) selon l'une des revendications 1 à 12 ; et
une paroi de support (86) supportant de manière rotative le premier arbre et le deuxième arbre ;
où
l'engrenage présente
un premier groupe de pignons (G') comprenant une pluralité de pignons supportés par le premier arbre, et
un deuxième groupe de pignons (G, CG') comprenant une pluralité de pignons engrenés avec le premier pignon et supportés par le deuxième arbre,
le deuxième groupe de pignons comprend un premier, un deuxième et un troisième pignons, et l'élément rotatif (G4), le premier élément exigeant lubrification (G6) et le deuxième élément exigeant lubrification (CG') sont respectivement réalisés par le premier, le deuxième et le troisième pignons (G4, G6, CG').

14. Transmission (1) selon la revendication 13, où
le premier pignon (G4) est adjacent à la paroi de support (86),
la paroi de support est formée avec une partie évidée (88) à un emplacement correspondant à un côté latéral du premier pignon,
la gouttière d'huile (20) est pourvue d'une plaque de fixation (24) fixée à la paroi de support de manière à recouvrir la partie évidée,
une surface circonférentielle extérieure du premier pignon, la partie évidée et la plaque de fixation forment un espace fermé, et
une ouverture de communication (24a, 24b) est formée à l'intérieur de la plaque de fixation,
la plaque de fixation étant formée comme section d'introduction (24), et étant prévue pour permettre à l'espace fermé de communiquer avec la section formant canal d'écoulement (22) de gouttière d'huile.

15. Transmission (1) selon la revendication 13 ou la revendication 14, où
la paroi de support (86) est pourvue d'une section formant un intervalle étroit (87a), par laquelle un intervalle entre la surface circonférentielle extérieure du premier pignon (G4) et la paroi de support est resserré à un emplacement correspondant à une surface où le premier pignon recueille l'huile lubrifiante, par rapport à un intervalle à un autre emplacement ne correspondant pas à la surface.
